# EUROPÄISCHE PATENTSCHRIFT

(11) **EP 4 407 152 B1**
(45) Veröffentlichungstag und Bekanntmachung des Hinweises auf die Patenterteilung: **04.11.2026**
(21) Anmeldenummer: 24153760.4
(22) Anmeldetag: 24.01.2024
(51) Int. Cl.: F01M 11/00, F01M 1/12, F02M 25/08, F16H 57/04

(54) **ÖLFÖRDERMODUL ZUR VERSORGUNG EINES AGGREGATS EINES KRAFTFAHRZEUGS**
OIL TRANSPORT MODULE FOR SUPPLYING AN AGGREGATE OF A MOTOR VEHICLE
MODULE DE REFOULEMENT D'HUILE DESTINÉ À ALIMENTER UN GROUPE D'UN VÉHICULE AUTOMOBILE

(30) Priorität: 24.01.2023 DE 102023101650; 07.09.2023 EP 23196072
(43) Veröffentlichungstag der Anmeldung: 31.07.2024
(73) Patentinhaber: Schwäbische Hüttenwerke Automotive GmbH, 73433 Aalen (DE)
(72) Erfinder: Kostic, Enis, 88422 Bad Buchau (DE); Kunzi, Harald, 71364 Winnenden (DE); Peters, Sven, 88427 Bad Schussenried (DE); Jäggle, Gerd, 88521 Ertingen (DE)
(74) Vertreter: SSM Sandmair

(56) Entgegenhaltungen:
- EP-A1- 2 154 342
- DE-U1- 202020 105 684

## Beschreibung

Die Erfindung betrifft ein Ölfördermodul zur Versorgung eines Aggregats (Maschinenaggregat) für ein, beispielsweise elektrisch oder vollelektrisch angetriebenes, Kraftfahrzeug. Eine Ölwanne des Ölfördermoduls weist beispielsweise ein mehrteiliges, wie z. B. dreiteiliges, Gehäuse auf. Die Ölwanne kann beispielsweise als Ölfiltermodul ausgestaltet sein und eine Ölfilteraufnahme bilden, die beispielsweise integraler Bestandteil des Gehäuses oder eines Gehäuseteils der Ölwanne sein kann. Die Ölwanne kann Teil des Ölfördermoduls sein, welches zur Versorgung mindestens eines Maschinenaggregats mit Öl, insbesondere zur Versorgung eines (Elektro-)Motors und/oder eines Getriebes eines Kraftfahrzeugs mit Öl ausgebildet ist. Das Maschinenaggregat kann beispielsweise eine Baueinheit oder eine Kombination aus Elektromotor und Getriebe, das an einer Antriebswelle und/oder einem Gehäuse des Elektromotors angeordnet ist, sein. Das Öl dient zur Schmierung und/oder Kühlung des Maschinenaggregats. Die Ölwanne umfasst ein Gehäuse mit einem Ölaufnahmeraum für die Bevorratung des Öls, das hierin auch als Fluid bezeichnet sein kann. Das Ölfördermodul kann neben der Ölwanne oder dem Ölfiltermodul mindestens eine Pumpe zur Förderung des Fluids zum Maschinenaggregat und einen Wärmetauscher aufweisen.

Aus dem Stand der Technik sind Fluidfördersysteme zur Versorgung eines Maschinenaggregats, insbesondere eines Motors oder eines Getriebes eines Kraftfahrzeugs, mit Fluid bekannt. Derartige Systeme basieren auf dem Konzept einer Druckumlaufschmierung, insbesondere einer Nasssumpfschmierung, wobei mittels einer Pumpe Fluid zu den Fluidverbrauchern, d. h. den zu schmierenden und/oder zu kühlenden Stellen, gefördert wird. Bei einer Nasssumpfschmierung wird das Öl beim Ablaufen von dem Maschinenaggregat in einem Reservoir, insbesondere einer Ölwanne, welches unterhalb des Maschinenaggregats angeordnet ist, aufgefangen. Mittels der Pumpe wird das Öl aus der Ölwanne abgepumpt und dem Maschinenaggregat erneut zugeführt. Auf diese Weise entsteht ein Ölkreislauf.

Es ist bekannt, die Ölwanne mit einem Ölfilter zu einem Ölfiltermodul zu kombinieren, das aus dem zum Maschinenaggregat geführten Öl Partikel und Verschmutzungen herausfiltert. Der Bauraum unterhalb eines Maschinenaggregats ist oftmals beengt. Eine kompakte Bauweise ist somit für das Ölfiltermodul oder allgemein das Ölfördermodul wünschenswert. Eine kompakte Bauweise kann jedoch die Herstellung erschweren.

Das Dokument DE 20 2020 105 684 U1 offenbart ein Ölfördermodul gemäß dem Oberbegriff des Anspruchs 1.

Es ist eine Aufgabe der Erfindung, ein Ölfördermodul anzugeben, welches zuverlässig arbeitet, einen geringen Platzbedarf hat und einfach herstellbar ist.

Die Aufgabe wird mit einem Ölfördermodul mit den Merkmalen gemäß Anspruch 1 gelöst. Vorteilhafte Weiterbildungen ergeben sich aus den abhängigen Ansprüchen, der Beschreibung und den Figuren.

Die Erfindung geht von einem Ölfördermodul, das zur Versorgung eines Aggregats für ein Kraftfahrzeug ausgebildet ist, aus. Das Ölfördermodul weist eine Ölwanne, eine Pumpe, insbesondere mit einem Antrieb, und einen Wärmetauscher auf. Die Pumpe kann vorzugsweise nicht nur funktionell, sondern strukturell, d. h. in geometrischer Hinsicht, zwischen dem Wärmetauscher und der Ölwanne angeordnet sein. Dadurch ergibt sich eine vorteilhaft kompakte Bauweise, bei der die Komponenten zu einem verhältnismäßig flachen Ölfördermodul zusammengefügt sind, wodurch das Ölfördermodul oder dessen Ölwanne unterhalb des Aggregats angeordnet werden kann.

Die Ölwanne umfasst ein Gehäuse, das einen Ölaufnahmeraum zur Bevorratung von Öl einfasst. Das Gehäuse umfasst einen Gehäuserahmen, einen Gehäuseboden und einen Gehäusedeckel, die beispielsweise separate Teile sind, die insbesondere miteinander fluiddicht verschweißt sein können. Alternativ kann einer aus Gehäuseboden und Gehäusedeckel integral mit dem Gehäuserahmen gebildet sein und der andere aus Gehäuseboden und Gehäusedeckel ein separates Teil oder Verschlussteil sein, das mit dem Gehäuserahmen gefügt, insbesondere verschweißt sein kann. Der Gehäuserahmen ist zwischen dem Gehäusedeckel und dem Gehäuseboden angeordnet. Der Gehäuserahmen kann eine umlaufende Seitenwand bilden, die den Ölaufnahmeraum umfangsseitig einfasst. Die Seitenwand kann mehrere Seitenwandabschnitte aufweisen. Einer der Seitenwandabschnitte kann als Anschlusswand ausgebildet sein, an der die Pumpe angeordnet ist. An der Anschlusswand können ein oder mehrere Anschlüsse zum fluidkommunizierenden Anschluss der Pumpe an die Ölwanne gebildet und/oder die Pumpe befestigt sein. Beispielsweise kann die Pumpe mit einem oder mehreren Schraubenbolzen, die jeweils mit einem Innengewinde der Anschlusswand verschraubt werden, an der Anschlusswand befestigt sein.

Die Pumpe kann auf einer zum Wärmetauscher weisenden ersten Seite einen ersten Pumpenauslass und auf einer zur Ölwanne, insbesondere der Anschlusswand, weisenden zweiten Seite, die der ersten Seite entgegengesetzt ist, einen ersten Pumpeneinlass aufweisen. Beispielsweise kann die Pumpe einen ersten Pumpeneinlass, über den, insbesondere aus der Ölwanne, Öl in die Pumpe förderbar ist, und einen ersten Pumpenauslass, über den Öl aus der Pumpe, insbesondere in den Wärmetauscher förderbar ist, aufweisen, wobei der erste Pumpeneinlass, insbesondere eine Einlasskanalmittelachse des ersten Pumpeneinlasses, und der erste Pumpenauslass, insbesondere eine Auslasskanalmittelachse des ersten Pumpenauslasses, in einer Linie und/oder senkrecht zu einer Antriebswelle der Pumpe angeordnet sind. Der erste Pumpeneinlass und der erste Pumpenauslass können dadurch in einer Linie angeordnet sein, dass die Einlasskanalmittelachse koinzident mit der Auslasskanalmittelachse ist, d. h. mit der Auslasskanalmittelachse fluchtet. Die Einlass- und Auslasskanalmittelachse können alternativ zueinander parallel sein oder senkrecht zu der Antriebswelle der Pumpe angeordnet sein. Durch die beschriebene Anordnung des ersten Pumpeneinlasses und des ersten Pumpenauslasses lassen sich die Ölwanne, der Wärmetauscher und die Pumpe kompakt und einfach zu dem Ölfördermodul zusammensetzen oder montieren. Ein weiterer Vorteil der fluchtenden Anordnung ist ein verringerter Druckverlust in dem die insbesondere erste Flut durchströmenden Öl, wodurch der Energieverbrauch der Pumpe verringert und der Wirkungsgrad erhöht werden.

Die Anschlusswand kann einen ersten, beispielsweise rohr- oder stutzenförmig ausgebildeten, Pumpeneinlassanschluss für den ersten Pumpeneinlass aufweisen. Der erste Pumpeneinlassanschluss kann mit dem ersten Pumpeneinlass verbunden, insbesondere in den ersten Pumpeneinlass eingesteckt sein. Der Wärmetauscher kann einen ersten Pumpenauslassanschluss für den ersten, beispielsweise rohr- oder stutzenförmig ausgebildeten, Pumpenauslass aufweisen. Der erste Pumpenauslass kann mit dem ersten Pumpenauslassanschluss verbunden, insbesondere in den ersten Pumpenauslassanschluss eingesteckt sein. Das Ölfördermodul ist so konfiguriert, dass mittels der Pumpe Öl aus dem Ölaufnahmeraum über die Pumpe in den Wärmetauscher förderbar ist, beispielsweise mit einer ersten Flut einer mehrflutigen, insbesondere zweiflutigen Pumpe. Grundsätzlich kann diese Funktion auch mit einer Pumpe mit nur einer Flut erzielt werden. Insbesondere können der erste beispielsweise rohr- oder stutzenförmige Pumpeneinlassanschluss und/oder der erste Pumpeneinlass eine Einlasskanallängsachse und der erste beispielsweise rohr- oder stutzenförmige Pumpenauslass und/oder der erste Pumpenauslassanschluss eine Auslasskanallängsachse bilden, wobei die Einlasskanallängsachse und die Auslasskanallängsachse parallel zueinander oder in einer Flucht zueinander angeordnet sind.

Die Pumpe kann beispielsweise für die erste Flut einen ersten Pumpensatz und für die zweite Flut einen zweiten Pumpensatz aufweisen, die beispielsweise entlang der Antriebswelle zueinander versetzt angeordnet sind. Der erste und/oder zweite Pumpensatz kann beispielsweise als Innenzahnradpumpe, alternativ als Flügelzellenpumpe ausgebildet sein. Der erste Einlassanschluss und der erste Auslassanschluss können bezogen auf die Längsrichtung der Antriebswelle bevorzugt zwischen dem ersten Pumpensatz und dem zweiten Pumpensatz angeordnet sein, wobei weiter bevorzugt ist, dass nur der erste Pumpensatz Öl über den ersten Pumpeneinlass in die Pumpe und über den ersten Pumpenauslass aus der Pumpe fördern kann. Der zweite Pumpensatz kann Öl über einen zweiten Pumpeneinlass in die Pumpe und über einen zweiten Pumpenauslass aus der Pumpe fördern.

Zwischen dem ersten Pumpensatz und einem vom ersten Einlassanschluss entlang der Einlasskanalmittelachse verlaufenden Einlasskanal kann eine Einlassöffnung gebildet sein, die den Einlasskanal mit einem Saugbereich des ersten Pumpensatzes verbindet. Zwischen dem ersten Pumpensatz und einem vom ersten Auslassanschluss entlang der Auslasskanalmittelachse verlaufenden Auslasskanal kann eine Auslassöffnung gebildet sein, die den Auslasskanal mit einem Druckbereich des ersten Pumpensatzes verbindet. Der Einlasskanal und der Auslasskanal und/oder die Einlasskanalmittelachse und die Auslasskanalmittelachse können bezogen auf die Längsrichtung der Antriebswelle zwischen dem ersten und zweiten Pumpensatz angeordnet sein.

Das in den Wärmetauscher geförderte Öl kann beispielsweise über einen Ölfilter zu dem zu versorgenden Aggregat und/oder zurück in die Ölwanne, insbesondere in einen Kanal der Ölwanne, förderbar sein. Die Ölwanne, insbesondere der Gehäusedeckel, kann auf der Oberseite mindestens einen Versorgungsauslass aufweisen, in den der Kanal mündet und über den das über die erste Flut geförderte Öl an das zu versorgende Aggregat abgegeben wird.

Vorteilhaft dient die erste Flut dazu, das in einem Aufnahmeraum der Ölwanne bevorratete Öl über den Wärmetauscher und optional den Ölfilter an das zu versorgende Aggregat zu leiten.

Die Ölwanne, insbesondere eine ihrer Seitenwände, vorzugsweise die Anschlusswand, kann eine Ölfilteraufnahme zur Aufnahme eines Ölfilters umfassen. Vorzugsweise wird die Ölfilteraufnahme integral von dem Gehäuserahmen, insbesondere der Anschlusswand gebildet. Die Ölfilteraufnahme kann einerseits mit dem Ölkanal des Ölfördermoduls und andererseits mit dem Wärmetauscher verbunden sein, wodurch Öl, insbesondere Öl der ersten Flut, aus dem Wärmetauscher über die Ölfilteraufnahme und den Ölfilter in den Kanal förderbar ist. Der Ölfilter kann als Ölfilterkartusche ausgebildet und in die Ölfilteraufnahme eingesetzt sein. Beispielsweise kann die Ölfilteraufnahme eine von der Ölwanne, insbesondere dem Gehäuserahmen oder der Anschlusswand, gebildete Umfangswand aufweisen, die den Ölfilter über dessen Umfang umgibt und von einem von dem Wärmetauscher gebildeten Deckel stirnseitig verschlossen ist. Der Deckel kann insbesondere die von der Anschlusswand wegweisenden Stirnseite verschließen und einen Durchgang aufweisen, über den aus dem Wärmetauscher gefördertes Öl durch den Deckel in die Ölfilteraufnahme gefördert wird. Die Ölfilteraufnahme kann an der dem Deckel gegenüberliegenden Stirnseite, die zum Beispiel von dem Gehäuserahmen oder der Anschlusswand gebildet wird, einen Durchgang aufweisen, der in den Kanal mündet, der in den mindestens einen Versorgungsauslass mündet. Der Ölfilter ist so angeordnet, dass das durch den Durchgang des Deckels in die Ölfilteraufnahme geförderte Öl den Ölfilter durchströmt und durch den Durchgang, der in den Kanal mündet, aus der Ölfilteraufnahme gefördert wird. Die Umfangswand kann eine Mittelachse aufweisen, die in Bezug auf die Anschlusswand und/oder eine Antriebswelle der Pumpe senkrecht oder in etwa senkrecht steht. Beispielsweise sind die Umfangswand und/oder der Ölfilter zylindrisch oder in etwa zylindrisch ausgebildet.

Die Pumpe kann von einem an ihr angeordneten, insbesondere als Elektromotor ausgebildeten Antrieb antreibbar sein. Die Pumpe und der Antrieb können eine Antriebs-Pumpeneinheit bilden. Die Antriebs-Pumpeneinheit, insbesondere der Antrieb und/oder die Pumpe, können zwischen der Anschlusswand des Gehäuserahmens und dem Wärmetauscher angeordnet sein. Dadurch wird eine platzsparende Anordnung erreicht. Alternativ oder zusätzlich kann die Pumpe zwischen der Ölfilteraufnahme, die vorzugsweise von der Anschlusswand oder dem Teil der Anschlusswand, der den mindestens einen Anschluss für die Pumpe bildet, ragt, und dem Antrieb positioniert sein. Dadurch wird ebenfalls eine platzsparende Anordnung erreicht.

Wie oben bereits beschrieben, kann die Pumpe oder die Antriebs-Pumpeneinheit an der Seitenwand der Wanne befestigt sein, beispielsweise mittels mehrerer Schraubenbolzen. In Weiterbildungen kann der Wärmetauscher an der Pumpe oder der Antriebs-Pumpeneinheit und an dem Gehäuserahmen, insbesondere der Ölfilteraufnahme der Ölwanne befestigt sein, beispielsweise mittels eines oder mehrerer Schraubenbolzen, die in ein Innengewinde der Pumpe und/oder der Ölfilteraufnahme eingeschraubt sind. Dadurch lässt sich das Ölfördermodul einfach montieren.

In Weiterbildungen können die Anschlusswand einen zweiten, insbesondere rohr- oder stutzenförmigen, Pumpeneinlassanschluss und einen zweiten, insbesondere rohr- oder stutzenförmigen, Pumpenauslassanschluss und die Pumpe einen zweiten Pumpeneinlass, der mit dem zweiten Pumpeneinlassanschluss verbunden ist, und einen zweiten Pumpenauslass, der mit dem zweiten Pumpenauslassanschluss verbunden ist, aufweisen. Insbesondere können der zweite Pumpeneinlassanschluss in den zweiten Pumpeneinlass und der zweite Pumpenauslassanschluss in den zweiten Pumpenauslass eingesteckt sein. Die Pumpe ist so konfiguriert, dass sie Öl von dem zweiten Pumpeneinlass bzw. zweiten Pumpeneinlassanschluss zu dem zweiten Pumpenauslass bzw. dem zweiten Pumpenauslassanschluss insbesondere mittels einer zweiten Flut, die in der Pumpe von der ersten Flut getrennt ist, fördern kann. Optional kann die Funktion der zweiten Flut mittels einer separaten Pumpe erzielt werden, jedoch ist eine zweiflutige Pumpe zugunsten einer kompakten Bauweise bevorzugt.

Die Ölwanne, insbesondere der Gehäusedeckel der Ölwanne, kann mindestens einen zur Rückführung von Öl aus dem Aggregat ausgebildeten Rückführeinlass aufweisen. Ferner kann die Ölwanne, insbesondere der Gehäuserahmen und/oder der Gehäusedeckel, einen Ölkanal aufweisen, der den Rückführeinlass mit dem zweiten Pumpeneinlassanschluss verbindet. Ferner kann die Ölwanne, insbesondere der Gehäuserahmen und/oder der Gehäusedeckel, einen Kanal aufweisen, der den Pumpenauslassanschluss mit dem Ölaufnahmeraum, beispielsweise einer ersten Sektion des Ölaufnahmeraums, verbindet. Dadurch kann das Ölfördermodul, insbesondere die Ölwanne und die Pumpe, Öl von dem Rückführeinlass über die Pumpe in den Ölaufnahmeraum fördern. Dadurch lässt sich rückgeführtes Öl gezielt an eine bestimmte Stelle des Ölaufnahmeraums, wie zum Beispiel in die erste Sektion des Ölaufnahmeraums fördern.

Mit einer zweiflutigen Pumpe oder zwei separaten Pumpen lässt sich somit Öl aus dem Aufnahmeraum der Ölwanne mit einer ersten Flut der Pumpe über den Wärmetauscher und den Ölfilter zu mindestens einem Versorgungsauslass der Ölwanne zur Versorgung des Aggregats mit Öl fördern. Zusätzlich lässt sich Öl von dem Rückführeinlass der Ölwanne mit der zweiten Flut der Pumpe an eine gewünschte Stelle in den Aufnahmeraum fördern.

In besonders kompakten Weiterbildungen kann eine Antriebswelle der Pumpe und/oder des Antriebs innerhalb einer Projektion der Anschlusswand, insbesondere in die Richtung, in die der mindestens eine Anschluss für die Pumpe ragt, und/oder zwischen von dem Gehäusedeckel und dem Gehäuseboden aufgespannten Ebenen angeordnet sein. Insbesondere kann die Antriebswelle parallel zu dem Gehäusedeckel oder dem Gehäuseboden der Ölwanne sein. In der im Fahrzeug vorgesehenen Einbaulage des Ölfördermoduls kann die Antriebswelle horizontal in Bezug auf das Schwerkraftfeld der Erde verlaufen.

Der Gehäusedeckel kann an der nach oben weisenden Stirnseite des Gehäuserahmens angeordnet sein und/oder den Ölaufnahmeraum von oben abschließen. Der Gehäuseboden kann an der nach unten weisenden Stirnseite des Gehäuserahmens angeordnet sein und/oder den Ölaufnahmeraum von unten abschließen. Beispielsweise kann der Gehäusedeckel auf der Stirnseite des Gehäuserahmens angeordnet sein, die zu einem Aggregat, welches mit Öl aus dem Ölfiltermodul versorgt wird, weist. Beispielsweise kann der Gehäuseboden auf der Stirnseite des Gehäuserahmens angeordnet sein, die von einem Aggregat, welches mit Öl aus der Ölwanne versorgt wird, weg weist. "Oben" bezieht sich auf die für den Betrieb der Ölwanne vorgesehene Einbaulage und weist vom Erdmittelpunkt weg. "Unten" bezieht sich auf die für den Betrieb der Ölwanne vorgesehene Einbaulage und weist zum Erdmittelpunkt hin. Die Ölwanne oder zumindest deren Gehäuse kann flach ausgeführt sein, insbesondere für ein, beispielsweise elektrisch oder vollelektrisch angetriebenes, Kraftfahrzeug mit einem tiefen Schwerpunkt, wie es bei Sportwagen der Fall sein kann. "Flach" heißt, dass die Höhe der Ölwanne oder des Gehäuses, die sich vom Gehäuseboden über den Gehäuserahmen bis zum Gehäusedeckel erstreckt, deutlich kleiner ist als die quer dazu sich erstreckende Länge und Breite.

Der Gehäusedeckel und der Gehäuseboden können beispielsweise parallel oder schräg zueinander angeordnet sein. Die umlaufende Seitenwand des Gehäuserahmens kann beispielsweise mehrere Seitenwandabschnitte aufweisen, die zusammen beispielsweise eine ungefähr rechteckige Form bilden. Zwei gegenüberliegende Seitenwandabschnitte können beispielsweise für eine parallele Anordnung von Gehäusedeckel und Gehäuseboden gleich hoch oder für eine schräge Anordnung von Gehäusedeckel und Gehäuseboden unterschiedlich hoch ausgeführt sein. Bevorzugt kann die höhere dieser Seitenwandabschnitte die Anschlusswand sein. Zwei weitere Seitenwandabschnitte können die zwei gegenüberliegenden Seitenwandabschnitte verbinden. Die zwei weiteren Seitenwandabschnitte können für die schräge Anordnung von Gehäuseboden und Gehäusedeckel keilförmig ausgebildet sein.

Der Gehäusedeckel kann mittels einer Fügeverbindung, wie z. B. einer Verschraubung oder vorzugsweise einer stoffschlüssigen Fügeverbindung, insbesondere durch Kleben oder Schweißen, mit dem Gehäuserahmen gefügt sein. Alternativ oder zusätzlich kann der Gehäuseboden mittels einer Fügeverbindung, wie z. B. einer Verschraubung oder vorzugsweise einer stoffschlüssigen Fügeverbindung, insbesondere durch Kleben oder Schweißen, mit dem Gehäuserahmen gefügt sein. Grundsätzlich können die Teile des Gehäuses aus Metall gebildet sein. Vorzugsweise sind die Gehäuseteile aus Kunststoff oder zumindest überwiegend aus Kunststoff gefertigt. D. h., dass zumindest einer aus Gehäuserahmen, Gehäuseboden und Gehäusedeckel aus einem Kunststoff oder überwiegend aus einem Kunststoff gebildet ist. In einem Ausführungsbeispiel können der Gehäuseboden, der Gehäusedeckel und der Gehäuserahmen voneinander separate Bauteile sein, die im montierten oder gefügten Zustand fluid- oder öldicht miteinander gefügt, insbesondere verschweißt sind, um beispielsweise den Ölaufnahmeraum nach außen hin abzudichten.

Der Gehäuserahmen als solcher, d. h. allein, kann einen oder mehrere Ölkanäle bilden. Alternativ oder zusätzlich kann der Gehäuserahmen zusammen mit dem Gehäuseboden und/oder dem Gehäusedeckel einen oder mehrere Ölkanäle bilden. Der oder die Ölkanäle können dazu dienen oder konfiguriert sein, Öl über die Ölwanne dem Aggregat zuzuführen und/oder aus dem Aggregat abzuführen. In Ausführungen, in denen der Gehäuserahmen zusammen mit dem Gehäusedeckel oder dem Gehäuseboden einen oder mehrere Ölkanäle bildet, können der Gehäuserahmen mit dem Gehäusedeckel und/oder dem Gehäuseboden so gefügt sein, wie z. B. mittels Kleben oder Verschweißen (d. h. stoffschlüssige Fügeverbindungen), dass der oder die Ölkanäle durch die Schweiß- oder Klebenaht nach außen hin und/oder zum Ölaufnahmeraum hin, insbesondere öl- oder fluiddicht, abgedichtet sind. Dadurch können separate, zwischen dem Gehäuserahmen und dem Gehäusedeckel bzw. zwischen dem Gehäuserahmen und dem Gehäuseboden angeordnete Dichtungen, wie z. B. Flachdichtungen, eingespart werden. Grundsätzlich sind aber auch Ausführungsformen mit solchen separaten Dichtungen möglich.

Die Ölwanne, insbesondere das Gehäuse oder der Gehäuserahmen, kann zur Bildung eines Ölfiltermoduls eine Ölfilteraufnahme, die zur Aufnahme eines Ölfilters konfiguriert ist, aufweisen oder integral bilden. Die beispielsweise topfförmig ausgebildete Ölfilteraufnahme kann eine Umfangswand und eine Stirnwand aufweisen. Der Ölfilter oder ein Ölfiltereinsatz (d. h. eine Ölfilterpatrone) kann in die Ölfilteraufnahme eingesetzt werden oder sein, wobei die Ölfilteraufnahme das Gehäuse für den Ölfiltereinsatz bilden kann. Es sind also Ausführungen möglich, bei denen der Ölfilter ein Ölfiltergehäuse und einen darin angeordneten Ölfiltereinsatz aufweist und in die Ölfilteraufnahme eingesetzt wird, und alternativ bei denen der Ölfilter im Wesentlichen nur den Ölfiltereinsatz aufweist und die Ölfilteraufnahme das Ölfiltergehäuse bildet. Letztere Ausführung hat den Vorteil, dass ein separates Gehäuse für den Ölfiltereinsatz und somit Gewicht, Bauraum und Kosten eingespart werden können. Die Ölfilteraufnahme kann ein von dem Gehäuse separates Bauteil sein, das z. B. an dem Gehäuse oder Gehäuserahmen befestigt oder zumindest fluidkommunizierend mit der Ölwanne oder einem Ölkanal der Ölwanne verbunden ist. Vorzugsweise bildet eines der Gehäuseteile, insbesondere der Gehäuserahmen, die Ölfilteraufnahme integral mit.

Die Ölwanne weist ferner einen Ansaugkanal auf, der in den, insbesondere von dem Gehäuse eingefassten, Ölaufnahmeraum reicht und eine Öffnung, über die Öl aus dem Ölaufnahmeraum durch den Ansaugkanal förderbar ist, aufweist. Der Ansaugkanal kann gänzlich oder vollständig innerhalb des Gehäuses oder im Ölaufnahmeraum angeordnet sein. Beispielsweise kann der Ansaugkanal an die Saugseite einer Pumpe angeschlossen sein, so dass Öl aus dem Ölaufnahmeraum durch den Ansaugkanal zur Pumpe hin ansaugbar ist. Die Öffnung ist so angeordnet, dass sie in den in dem Ölaufnahmeraum bevorrateten Ölsumpf reicht.

Die Ölwanne, insbesondere das Gehäuse oder dessen Gehäuserahmen kann einen Pumpeneinlassanschluss aufweisen, der fluidkommunizierend mit dem Einlass einer Förderpumpe verbunden oder verbindbar ist. Der Ansaugkanal ist fluidkommunizierend mit dem Pumpeneinlassanschluss verbunden. Dadurch kann aus dem Ölaufnahmeraum Öl über die Öffnung des Ansaugkanals, den Ansaugkanal und den Pumpeneinlassanschluss gefördert, insbesondere von der Pumpe angesaugt werden.

Der Ansaugkanal kann von dem Gehäuse der Ölwanne oder als davon separates Teil gebildet sein. Beispielsweise kann der Ansaugkanal - der in Ausführungsformen gänzlich oder vollständig innerhalb des Gehäuses oder im Ölaufnahmeraum angeordnet sein kann - von einem rohrförmigen Körper, d. h. einem Ansaugrohr, gebildet sein, der in eine von dem Gehäuse, insbesondere dem Gehäuserahmen, gebildete Kanalaufnahme eingesteckt ist. Die Kanalaufnahme kann integral mit dem Gehäuse, insbesondere dem Gehäuserahmen, gebildet sein. Das Gehäuse, insbesondere der Gehäuserahmen kann einen Kanal oder Durchgang bilden, der die Kanalaufnahme und den Pumpeneinlassanschluss verbindet. Zwischen dem Ansaugrohr, das den Ansaugkanal bildet, und der Kanalaufnahme kann beispielsweise eine Dichtung zur Abdichtung eines zwischen dem Ansaugrohr und der Kanalaufnahme gebildeten Spalts oder Dichtspalts angeordnet sein.

Beispielsweise kann der Gehäuserahmen den Ansaugkanal oder zumindest einen Teil des Ansaugkanals, insbesondere integral, bilden. Insbesondere kann der Ansaugkanal einen in Kanallängsrichtung offenen Abschnitt aufweisen, der von dem Gehäuse oder dem Gehäuserahmen gebildet ist. Der offene Abschnitt kann von dem Gehäusedeckel oder einem separaten Deckel zur Bildung eines geschlossenen Kanalquerschnitts des Ansaugkanals verschlossen sein. Im Gegensatz zu einer Ausführung, bei welcher der Ansaugkanal von einem Ansaugrohr, das separat von dem Gehäuse, insbesondere dem Gehäuserahmen ist, gebildet wird, kann der einen in Kanallängsrichtung offenen Abschnitt aufweisende Ansaugkanal integraler Bestandteil des Gehäuses, insbesondere eines der Gehäuseteile, wie z. B. des Gehäuserahmens oder des Gehäusebodens sein. In alternativen Ausführungen kann der Ansaugkanal vollständig von dem Gehäuserahmen gebildet, d. h. integraler Bestandteil des Gehäuserahmens sein.

Der Ölkanal oder einer der Ölkanäle kann fluidkommunizierend mit der Ölfilteraufnahme verbunden sein oder in die Ölfilteraufnahme münden. Dadurch kann erreicht werden, dass das Öl, welches von einem in der Ölfilteraufnahme angebrachten Ölfilter vor Verunreinigungen gefiltert wurde, durch den Ölkanal förderbar ist, insbesondere zu einem Fluidverbraucher oder dem Aggregat, dem das Öl zugeführt werden soll.

Insbesondere kann die Ölwanne, wie z. B. dessen Gehäuse, beispielsweise der Gehäuserahmen und/oder vorzugsweise der Gehäusedeckel mindestens einen zur Ölversorgung des Aggregats ausgebildeten Versorgungsauslass aufweisen. Der Ölkanal oder einer der Ölkanäle kann die Ölfilteraufnahme und den mindestens einen Versorgungauslass fluidkommunizierend verbinden, so dass durch den Ölkanal Öl von der Ölfilteraufnahme zu dem mindestens einen Versorgungsauslass förderbar ist. Der Versorgungsauslass kann nach oben oder zu dem Aggregat hin weisen. Insbesondere kann der Versorgungsauslass auf der Oberseite des Gehäuses, insbesondere des Gehäusedeckels, angeordnet sein. Beispielsweise kann die Ölwanne einen einzigen, zwei, drei oder noch mehr solche Versorgungsauslässe aufweisen. In Ausführungen kann ein Versorgungsauslass für die Versorgung des Elektromotors und ein zusätzlicher Versorgungsauslass für die Versorgung des Getriebes mit Öl vorgesehen sein.

Die Ölwanne kann alternativ oder zusätzlich einen oder mehrere Rückführeinlässe zur Rückführung von Öl aus dem Aggregat in die Ölwanne aufweisen. Das z. B. vom Aggregat abtropfende oder abfließende Öl kann durch die Schwerkraft über den mindestens einen Rückführeinlass in die Ölwanne zurückgeführt werden. Beispielsweise kann das Öl aus dem Aggregat über den Rückführeinlass direkt, insbesondere schwerkraftbedingt bzw. ohne den Weg über eine Pumpe nehmen zu müssen, in die Ölwanne bzw. den Ölaufnahmeraum oder über den Ölkanal oder einen der mehreren Ölkanäle, die von dem Gehäuserahmen oder von dem Gehäuserahmen zusammen mit dem Gehäusedeckel gebildet werden, geführt werden.

Beispielsweise kann die Ölwanne einen oder mehrere Rückführeinlässe zur Rückführung von Öl aus dem Aggregat in die Ölwanne und einen, insbesondere zusätzlichen oder zweiten, Pumpeneinlassanschluss zur Förderung von Fluid von dem Rückführeinlass oder einem der Rückführeinlässe in eine Pumpe aufweisen. Der Ölkanal oder einer der Ölkanäle kann den Rückführeinlass oder einen der Rückführeinlässe mit dem Pumpeneinlassanschluss verbinden, so dass Öl durch den Ölkanal von dem Rückführeinlass oder einem der Rückführeinlässe zu dem Pumpeneinlassanschluss förderbar ist. Über die Pumpe kann das vom Rückführeinlass über den Ölkanal und den Pumpeneinlassanschluss geförderte Öl zurück in die Ölwanne, insbesondere in den Ölaufnahmeraum gefördert werden. Der Vorteil hierbei ist, dass der Ölkanal, über den die Pumpe das Öl in den Ölaufnahmeraum fördert, so ausgebildet sein kann, dass er das Öl an eine gewünschte Stelle in den Ölaufnahmeraum fördert, wie z. B. in den Bereich der Öffnung des Ansaugkanals oder in eine Sektion des in mehrere Sektionen unterteilten Ölaufnahmeraums, wie z. B. in die Sektion, in der die Öffnung des Ansaugkanals angeordnet ist oder in die der Ansaugkanal mündet. Beispielsweise kann der Ölkanal, der den Pumpenauslassanschluss mit dem Ölaufnahmeraum verbindet, in den Ölaufnahmeraum oder die genannte Sektion des Ölaufnahmeraums münden. Der Ölkanal oder einer der Ölkanäle kann den Pumpenauslassanschluss, der mit einem Auslass der Pumpe verbunden ist oder verbunden werden kann, mit dem Ölaufnahmeraum verbinden, so dass durch den Ölkanal Öl von dem Pumpenauslassanschluss in den Ölaufnahmeraum, insbesondere die genannte Sektion, förderbar ist.

Die Ölwanne kann alternativ oder zusätzlich einen oder mehrere Rückführeinlässe zur direkten Rückführung von Öl aus dem Aggregat in die Ölwanne aufweisen. Insbesondere kann das Gehäuse, wie z. B. der Gehäusedeckel den einen oder die mehreren Rückführeinlässe aufweisen. Der Rückführeinlass oder einer der Rückführeinlässe kann, insbesondere direkt, in den Ölaufnahmeraum münden, so dass Öl von dem Rückführeinlass direkt in den Ölaufnahmeraum, insbesondere in eine erste Sektion oder eine zweite Sektion des Ölaufnahmeraums strömen kann. Die erste Sektion kann die Sektion sein, in die der Ansaugkanal mündet oder in der die Öffnung des Ansaugkanals angeordnet ist. Die zweite Sektion kann eine beispielsweise durch eine Trennwand von der ersten Sektion getrennte Sektion des Ölaufnahmeraums sein. Beispielsweise kann ein Rückführeinlass vorgesehen sein, über den Öl aus dem Aggregat direkt in die erste Sektion förderbar ist und/oder ein Rückführeinlass vorgesehen sein, über den Öl aus dem Aggregat direkt in die zweite Sektion förderbar ist.

Die Trennwand, die die zwei Sektionen voneinander teilt, kann einen Durchgang aufweisen, der die zwei Sektionen fluidkommunizierend miteinander verbindet. Der Durchgang bildet eine Engstelle, so dass Öl gedrosselt von der einen Sektion in die andere Sektion fließen kann. Dadurch kann vorteilhaft erreicht werden, dass Öl aus der ersten Sektion zwar grundsätzlich in die zweite Sektion abfließen kann, dies jedoch nur gedrosselt, so dass die Gefahr, dass bei Kurvenfahrten plötzlich kein Öl mehr an der Öffnung des Ansaugkanals zur Verfügung steht, verringert wird. Durch den gedrosselten Abfluss des Öls aus der ersten Sektion in die zweite Sektion dauert es länger, bis das Öl in die zweite Sektion gelangt, im Vergleich zu Ausführungen, in denen keine Trennwand vorhanden ist und das Öl ungedrosselt von der ersten in die zweite Sektion fließen kann. Ebenso wird ein Überfüllen der ersten Sektion vermieden, da überschüssiges Öl durch den Durchgang in die zweite Sektion abfließen kann. Der Durchgang erlaubt ferner, dass Öl aus der zweiten Sektion in die erste Sektion fließen kann, so dass Öl aus der zweiten Sektion auch in der ersten Sektion zur Verfügung steht, sofern dort ein Mangel an Öl herrscht.

In Weiterbildungen kann die Ölwanne oder der Gehäusedeckel einen Rückführeinlass zur Rückführung von Öl aus dem Aggregat in den Aufnahmeraum oder die erste Sektion des Aufnahmeraums, aufweisen, wobei die Öffnung des Ansaugkanals unterhalb oder in einer Projektion des Rückführeinlasses angeordnet ist. Dadurch kann erreicht werden, dass das Öl aus dem Aggregat direkt in die erste Sektion leitbar ist. Alternativ oder zusätzlich kann zwischen dem Rückführeinlass und der Öffnung ein Abweiser angeordnet sein, der so konfiguriert ist, dass aus dem Rückführeinlass in die Ölwanne strömendes Öl gegen den Abweiser strömt oder fließt. Der Abweiser verhindert somit eine direkte Anströmung der Öffnung durch aus dem Rückführeinlass in den Ölaufnahmeraum strömendes Öl. Der Abweiser kann beispielsweise kragenförmig, kuppelförmig oder plattenförmig ausgestaltet sein. Auch andere Formen sind möglich, solange eine direkte Anströmung der Öffnung verhindert wird. Der Vorteil des Verhinderns der direkten Anströmung der Öffnung liegt darin, dass das aus dem Aggregat zurückfließende Öl durch den Umweg über den Abweiser beruhigt wird. Dadurch kann der Effekt verringert werden, dass zurückfließendes Öl übermäßig Luft und Verwirbelungen in das in der ersten Sektion befindliche Öl einbringt. Dadurch kann das Ansaugen des Öls in den Ansaugkanal verbessert oder der Luftanteil in dem angesaugten Öl verringert werden.

In vorteilhaften Ausführungsformen können in dem oder in mindestens einem oder in jedem der Rückführungseinlässe zur Rückführung von Öl aus dem Aggregat in die Ölwanne ein Sieb angeordnet sein, das so konfiguriert ist, dass es von dem vom Aggregat in die Ölwanne zurückgeführten Öl durchströmt wird. Das Sieb bewirkt einerseits, dass von dem Aggregat sich gegebenenfalls lösende Verunreinigungen nicht in die Ölwanne gelangen. Andererseits kann durch das Sieb das zurückfließende Öl von Schaumanteilen oder Verwirbelungen beruhigt werden, insbesondere alternativ oder zusätzlich zu einem optional vorgesehenen Abweiser.

Der eine Ölkanal oder die mehreren Ölkanäle, die der Gehäuserahmen zusammen mit dem Gehäusedeckel und/oder dem Gehäuseboden bildet, können beispielsweise zwischen dem Gehäuserahmen und dem Gehäusedeckel bzw. dem Gehäuserahmen und dem Gehäuseboden angeordnet sein.

Beispielsweise kann wenigstens einer aus Gehäuserahmen und Gehäusedeckel auf seiner zum Gehäusedeckel bzw. Gehäuserahmen weisenden Seite mindestens einen Kanalabschnitt aufweisen, der z. B. rinnenförmig ausgestaltet sein kann. Der mindestens eine Kanalabschnitt kann von dem anderen aus Gehäusedeckel und Gehäuserahmen, insbesondere von mindestens einem korrespondierenden, beispielsweise rinnenförmigen Kanalabschnitt, zur Bildung eines geschlossenen Kanalquerschnitts des einen oder der mehreren Kanäle abgedeckt sein. Der Gehäuserahmen und der Gehäusedeckel können zusammen den mindestens einen Ölkanal bilden.

Beispielsweise kann alternativ oder zusätzlich wenigstens einer aus Gehäuserahmen und Gehäuseboden auf seiner zum Gehäuseboden bzw. Gehäuserahmen weisenden Seite mindestens einen Kanalabschnitt aufweisen, der z. B. rinnenförmig ausgestaltet sein kann. Der mindestens eine Kanalabschnitt kann von dem anderen aus Gehäuseboden und Gehäuserahmen, insbesondere von mindestens einem korrespondierenden, beispielsweise rinnenförmigen Kanalabschnitt, zur Bildung eines geschlossenen Kanalquerschnitts des einen oder der mehreren Kanäle abgedeckt sein. Der Gehäuserahmen und der Gehäuseboden können zusammen den mindestens einen Ölkanal bilden.

Dadurch, dass der Ölkanal von dem Gehäuserahmen und dem Gehäusedeckel und/oder dem Gehäuseboden gebildet wird, wird die Herstellung des Gehäuses vereinfacht. Der rinnenförmige Abschnitt lässt sich bei der Formung, insbesondere Urformung wie z. B. Spritzgießen, des Gehäuserahmens oder des Gehäusedeckels bzw. des Gehäusebodens vorsehen. Durch das Zusammenfügen des Gehäuserahmens mit dem Gehäusedeckel und dem Gehäuseboden können der Ölkanal oder die Ölkanäle fertig gestellt werden. Eine Herstellung der Ölkanäle beispielsweise durch spanende Fertigung oder Nachbearbeitung kann dadurch vermieden oder zumindest der Anteil solcher Nachbearbeitungen verringert werden.

Beispielsweise kann nur einer oder können mehrere Ölkanäle vorgesehen sein, welche den mindestens einen Versorgungsauslass oder mehrere Versorgungsauslässe fluidkommunizierend mit der Ölfilteraufnahme verbinden. Alternativ oder zusätzlich kann ein Ölkanal oder können mehrere Ölkanäle für die Verbindung des Rückführeinlasses oder mehrerer Rückführeinlässe mit dem Pumpeneinlassanschluss vorgesehen sein. In solchen Ausführungsformen kann es zweckmäßig sein, zusätzlich einen oder mehrere Ölkanäle vorzusehen, die den Pumpenauslassanschluss mit dem Ölaufnahmeraum, insbesondere der ersten Sektion des Ölaufnahmeraums, fluidkommunizierend verbindet/verbinden. Die genannten Ölkanäle können auf die hierin beschriebene Weise durch Abdecken eines rinnenförmigen Abschnitts gebildet werden.

In Weiterbildungen kann das Gehäuse, beispielsweise der Gehäuserahmen eine Sensoraufnahme aufweisen oder integral bilden, an der ein Peripheriegerät, insbesondere ein Temperatursensor befestigt ist. Insbesondere kann der Temperatursensor in die Sensoraufnahme eingesteckt oder eingerastet werden. Die Sensoraufnahme bzw. das Peripheriegerät können so konfiguriert sein, dass mit dem Peripheriegerät ein Parameter, insbesondere die Temperatur, des Öls in dem Ölkanal oder in einem der Ölkanäle erfassbar ist. Beispielsweise kann sich das Peripheriegerät in den Ölkanal oder einen der Ölkanäle erstrecken. Bevorzugt erstreckt sich der Temperatursensor in den die Ölfilteraufnahme und einen Versorgungsauslass verbindenden Ölkanal, insbesondere zwischen der Ölfilteraufnahme und dem Versorgungsauslass.

Die mindestens eine Pumpe kann zweiflutig ausgebildet sein, wobei eine Flut dazu dient, Öl aus der Ölwanne zu fördern und dem Maschinenaggregat zuzuführen, und eine zweite Flut dazu dient, aus dem Aggregat zurückgeführtes Öl an eine bestimmte Stelle des Ölaufnahmeraums zu fördern. Ein Pumpeneinlass, insbesondere ein erster Pumpeneinlass kann fluidkommunizierend mit dem Ansaugkanal, insbesondere dem (ersten) Pumpeneinlassanschluss des Gehäuses der Ölwanne verbunden sein, so dass Öl aus der Ölwanne über den Ansaugkanal in die Pumpe förderbar ist. Ein (erster) Pumpenauslass der Pumpe kann mit der Ölwanne oder deren (erstem) Ölkanal fluidkommunizierend verbunden sein, so dass Öl aus der Pumpe in den Ölkanal der Ölwanne förderbar ist. Insbesondere kann Öl über den (ersten) Pumpenauslass der Pumpe über den Ölkanal zu dem mindestens einen Versorgungsauslass zur Versorgung des Aggregats mit Öl gefördert werden. Zwischen dem (ersten) Pumpenauslass und dem Ölkanal des Ölfiltermoduls können beispielsweise die Ölfilteraufnahme und der Ölfilter angeordnet sein. Dementsprechend ist der (erste) Pumpenauslass der Pumpe fluidkommunizierend mit der Ölfilteraufnahme verbunden. Um die vom Aggregat in das zurückgeführte Öl abgegebene Wärme aus dem Fluidkreislauf abführen zu können, kann ein Wärmetauscher vorgesehen sein. Der Wärmetauscher kann zwischen dem (ersten) Pumpenauslass und der Ölwanne oder der Ölfilteraufnahme der Ölwanne angeordnet sein. Der Wärmetauscher ist so konfiguriert, dass er von dem aus dem ersten Pumpenauslass zu dem Ölfiltermodul geförderten Öl durchströmbar ist. Dem Öl, das durch den Wärmetauscher strömt, kann Wärmeenergie entzogen werden.

In Ausführungen mit einem (zweiten) Ölkanal zur Förderung von Fluid aus der Rückführöffnung zu einem (zweiten) Pumpeneinlassanschluss und/oder einem (dritten) Ölkanal zur Förderung von Fluid von dem (zweiten) Pumpenauslassanschluss in den Ölaufnahmeraum, insbesondere die erste Sektion des Ölaufnahmeraums, kann eine Pumpe vorgesehen sein, mit welcher das Öl aus dem einen (zweiten) Ölkanal in den anderen (dritten) Ölkanal förderbar ist, insbesondere von dem Rückführeinlass in den Ölaufnahmeraum.

Allgemein kann ein Pumpeneinlass der Pumpe fluidkommunizierend mit einem Ölkanal der Ölkanäle und ein Pumpenauslass der Pumpe fluidkommunizierend mit einem anderen Ölkanal der Ölkanäle verbunden sein, so dass mittels der Pumpe Öl aus dem einen Ölkanal in den anderen Ölkanal förderbar ist. Die Pumpe kann eine zweite Pumpe sein, die zusätzlich zu der Pumpe für die Förderung des Öls aus dem Ansaugkanal zu dem mindestens einen Versorgungsauslass vorgesehen ist. D. h., dass zwei Pumpen vorgesehen sein können. In vorteilhaften Weiterbildungen kann eine zweiflutige Pumpe vorgesehen sein, welche einen ersten Pumpeneinlass und einen ersten Pumpenauslass für die Förderung von Fluid aus der Ölwanne zu dem mindestens einen Versorgungsauslass und einen zweiten Pumpeneinlass und einen zweiten Pumpenauslass zur Förderung von Fluid von dem mindestens einen Rückführeinlass in den Ölaufnahmeraum bzw. den dritten Ölkanal aufweist. Vorzugsweise kann die mindestens eine Pumpe einen Pumpenantrieb, wie z. B. einen Elektromotor aufweisen.

In Ausführungsformen mit zwei gegenüberliegenden, unterschiedlich hoch ausgebildeten Seitenwandabschnitten des Gehäuserahmens und/oder schräg zueinander verlaufendem Boden und Deckel können mindestens einer, vorzugsweise mehrere oder jeder aus erstem und zweitem Pumpeneinlassanschluss und dem Pumpenauslassanschluss an dem höheren der gegenüberliegenden Seitenwandabschnitte angeordnet sein. Alternativ oder zusätzlich kann die Kanalaufnahme, in die der Ansaugkanal eingesteckt oder einsteckbar ist, von dem höheren der gegenüberliegenden Seitenwandabschnitte gebildet sein.

Die Erfindung wurde anhand mehrerer bevorzugten Ausführungen und Beispiele beschrieben. Im Folgenden wird eine Ausführungsform der Erfindung anhand von Figuren beschrieben. Die dabei offenbarten Merkmale bilden den Gegenstand der Erfindung einzeln und in jeglicher Merkmalskombination vorteilhaft weiter. Es zeigen:
- Figur 1: ein Ölfördermodul mit einer Ölwanne, einer Pumpe und einem Wärmetauscher zur Anbringung an ein Maschinenaggregat,
- Figur 2: das Ölfördermodul aus Figur 1, wobei dessen Komponenten in einer Explosionsdarstellung dargestellt sind,
- Figur 3: eine zusammengebaute Ölwanne in perspektivischer Ansicht,
- Figur 4: die Ölwanne aus Figur 3, wobei Teile davon vereinzelt dargestellt sind,
- Figur 5: eine Draufsicht auf einen Gehäuserahmen der Ölwanne mit einem Ansaugkanal,
- Figur 6: eine perspektivische Ansicht der Teile aus Figur 5,
- Figur 7: eine perspektivische Ansicht einer Pumpe,
- Figur 8: eine Draufsicht auf das Ölfördermodul in einem Teilschnitt und
- Figur 9: eine Seitenansicht des Ölfördermoduls in einem Teilschnitt.

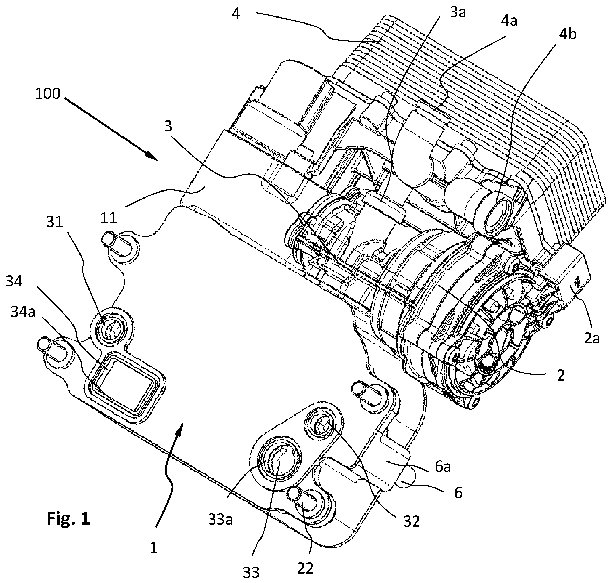

Die Figuren 1, 2, 8 und 9 zeigen ein Ölfördermodul 100, welches eine Ölwanne 1, eine Pumpe 3 mit einem Antrieb 2, eine Ölfilteraufnahme 11 mit einem Ölfilter 5 und einen Wärmetauscher 4 umfasst. Die in dem Ausführungsbeispiel als Ölfiltermodul ausgestaltete Ölwanne 1 bildet die Ölfilteraufnahme 11, in die der Ölfilter 5 eingesetzt ist. In alternativen Ausführungen kann das Ölfördermodul 100 eine separate, d. h. nicht integral mit einem Gehäuse 10, 20, 30 der Ölwanne 1 gebildete Ölfilteraufnahme 11, in die der Ölfilter 5 eingesetzt oder einsetzbar ist, aufweisen, wobei in solchen Ausführungen jedoch bevorzugt ist, dass die Ölfilteraufnahme 11 fluidkommunizierend, insbesondere über eine Leitung oder einen Kanal, mit dem in den Figuren gezeigten Ölkanal 15 verbunden ist, wozu die Ölwanne 1 oder dessen Gehäuse 10, 20, 30 oder Gehäuserahmen 10 einen Anschluss zur Verbindung mit der Ölfilteraufnahme 11 aufweisen kann.

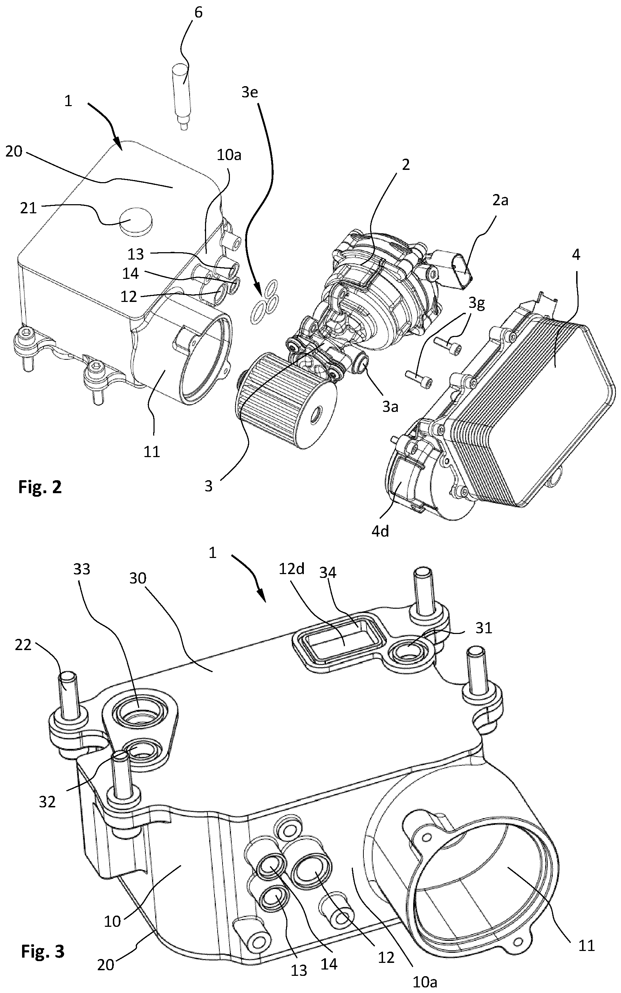

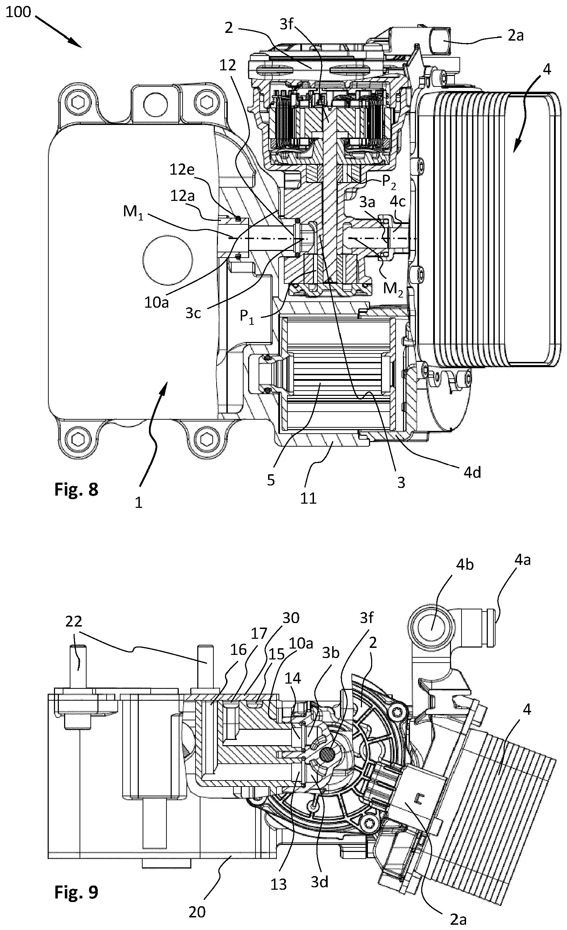

Für eine kompakte Bauweise des Ölfördermoduls 100 ist die Pumpe 3 in struktureller bzw. geometrischer Hinsicht zwischen dem Wärmetauscher 4 und der Ölwanne 1 angeordnet, beispielsweise an einer Anschlusswand 10a des Gehäuserahmens 10 befestigt. Die Pumpe 3 ist mittels mehrerer Schraubenbolzen 3g (Figur 2), die in ein Innengewinde des Gehäuserahmens 10 oder der Anschlusswand 10a eingeschraubt sind, an dem Gehäuserahmen 10 oder der Anschlusswand 10a befestigt. Der Wärmetauscher 4 ist mittels mehrerer Schraubenbolzen (Figuren 8 und 9) an der Ölfilteraufnahme 11 und dem Antrieb 2 oder/und der Pumpe 3 befestigt.

Das Ölfördermodul 100 dient dazu, einem Maschinenaggregat, wie z. B. einer Elektromotor-Getriebeeinheit, insbesondere für ein Kraftfahrzeug, Öl zur Kühlung und/oder Schmierung zuzuführen und das zurücklaufende Öl aufzunehmen und für ein erneutes Zuführen zum Aggregat bereitzustellen. Hierzu wird das Ölfördermodul 100 mit der Oberseite der Ölwanne 1, an der sich Versorgungsauslässe 31, 32 befinden, an dem Aggregat befestigt. Die Versorgungsauslässe 31, 32 werden in dem gezeigten Beispiel von einem Gehäusedeckel 30 gebildet. Über die Versorgungsauslässe 31, 32 wird dem Aggregat Öl zugeführt. Beispielsweise kann über einen der Versorgungsauslässe 31, 32 dem Elektromotor und über den anderen der Versorgungsauslässe 31, 32 dem Getriebe Öl zugeführt werden. An der Oberseite der Ölwanne 1 sind außerdem Rückführeinlässe 33, 34 angeordnet, über die aus dem Aggregat zurückfließendes Öl der Ölwanne 1 zugeführt wird. Die Rückführeinlässe 33, 34 werden in dem gezeigten Beispiel von dem Gehäusedeckel 30 gebildet. Beispielsweise kann über einen der Rückführeinlässe 33, 34 Öl aus dem Elektromotor und über den anderen der Rückführeinlässe 33, 34 Öl aus dem Getriebe in die Ölwanne 1 bzw. das Ölfördermodul 100 zurückgeführt werden. In dem gezeigten Ausführungsbeispiel werden die Ölwanne 1 und somit die daran befestigten Komponenten des Ölfördermoduls 100 mittels mehrerer Schraubenbolzen 22 (Figur 1) an dem Aggregat befestigt. Das Gehäuse 10, 20, 30 der Ölwanne 1 wird zwischen einem Kopf des Schraubenbolzens 22 und dem Aggregat eingeklemmt.

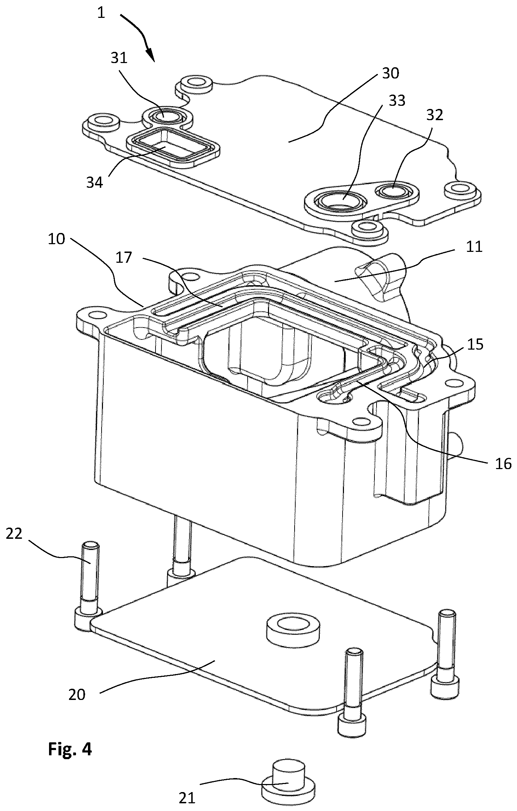

Wie beispielsweise in den Figuren 3 und 4 dargestellt ist, weist die Ölwanne 1 ein Gehäuse 10, 20, 30 auf, welches einen Gehäuserahmen 10, einen Gehäuseboden 20 und einen Gehäusedeckel 30 umfasst. Der Gehäuserahmen 10 ist zwischen dem Gehäusedeckel 30 und dem Gehäuseboden 20 angeordnet. Der Gehäuserahmen 10 bildet eine umlaufende Seitenwand, an deren nach unten weisender Stirnseite der Gehäuseboden 20 und an deren nach oben weisender Stirnseite der Gehäusedeckel 30 angebracht sind. Die umlaufende Seitenwand weist vier Seitenwandabschnitte auf, die zusammen einen Ölaufnahmeraum 18 beispielsweise rechteckig umgeben. Von diesen Seitenwandabschnitten ist eine als Anschlusswand 10a ausgebildet, nämlich die, die zur Pumpe 3 und/oder dem Wärmetauscher 4 weist. Im Ausführungsbeispiel sind der Gehäusedeckel 30 und der Gehäuseboden 20 parallel zueinander angeordnet und die vier Seitenwandabschnitte gleich hoch. In einer Variante der in den Figuren gezeigten Ausführungsform können gegenüberliegende Seitenwandabschnitte unterschiedlich hoch und die beiden Seitenwandabschnitte, welche die gegenüberliegenden Seitenwandabschnitte verbinden, keilförmig ausgebildet sein, wodurch Gehäusedeckel 30 und Gehäuseboden 20 schräg, insbesondere spitzwinklig zueinander angeordnet sind. Durch die Variante lässt sich eine besonders kompakte Bauweise der Ölwanne 1 erreichen, die dennoch hinreichend Platz an dem höheren, d. h. der Anschlusswand 10a, der gegenüberliegenden Seitenwandabschnitte für beispielsweise eine Ölfilteraufnahme 11, optional eine Sensoraufnahme 6a und die Pumpenanschlüsse 12, 13, 14, die weiter unten erklärt werden, bietet. Die im Ausführungsbeispiel gezeigte Seitenwand hat ebenfalls einen geringen Platzbedarf, ist aber nicht ganz so kompakt wie die Variante, dafür aber konstruktiv etwas einfacher gehalten.

Im Ausführungsbeispiel ist der Gehäuseboden 20 im Vergleich zum Gehäuserahmen 10 und Gehäusedeckel 30 einfach gehalten. Der Gehäuseboden 20 schließt einen Ölaufnahmeraum 18 von unten ab und ist im Wesentlichen plattenförmig ausgebildet. Der komplexere Gehäuserahmen 10 und Gehäusedeckel 30 bilden gemeinsam Ölkanäle 15, 16, 17. Der Gehäusedeckel 30 schließt den Ölaufnahmeraum 18 von oben ab. Der Gehäuserahmen 10 ist nach oben und unten hin offen und mit den dort montierten Gehäuseboden 20 und Gehäusedeckel 30 fluiddicht verschlossen. Der Gehäuserahmen 10 bildet integral eine Ölfilteraufnahme 11, eine Sensoraufnahme 6a und die beispielsweise rohr- oder stutzenförmigen Pumpenanschlüsse 12, 13, 14 aus. Insbesondere bildet die Anschlusswand 10a integral die Ölfilteraufnahme 11 und die Pumpenanschlüsse 12, 13, 14, sowie optionale mehrere Innengewinde zum Befestigen der Pumpe 3 an der Anschlusswand 10a. Die Innengewinde können jeweils von einer Gewindebuchse gebildet sein, die von der Anschlusswand 10a in Richtung Pumpe 3 absteht.

Beispielsweise können der Gehäuserahmen 10, der Gehäuseboden 20 und der Gehäusedeckel 30 aus Kunststoff gefertigt sein. Insbesondere können der Gehäuseboden 20 mit dem Gehäuserahmen 10 und der Gehäusedeckel 30 mit dem Gehäuserahmen 10 jeweils durch Kleben oder Schweißen verbunden sein. Optional können Gehäuserahmen 10, Gehäuseboden 20 und Gehäusedeckel 30 miteinander verschraubt sein.

Der Gehäuseboden 20 weist eine Ölablasseinrichtung in Form einer Ölablassschraube 21 auf. Die Ölablassschraube 21 ist in ein Innengewinde des Gehäusebodens 20 eingeschraubt und kann zum Ablassen des Öls entfernt werden.

Das Gehäuse 10, 20, 30 bildet mit dem von ihm eingefassten Ölaufnahmeraum 18 eine Ölwanne 1. In dem Ölaufnahmeraum 18 wird das von dem Aggregat zurückströmende Öl bevorratet, wobei Öl aus dem Ölaufnahmeraum 18 mittels der Pumpe 3 angesaugt und dem Aggregat erneut zugeführt werden kann.

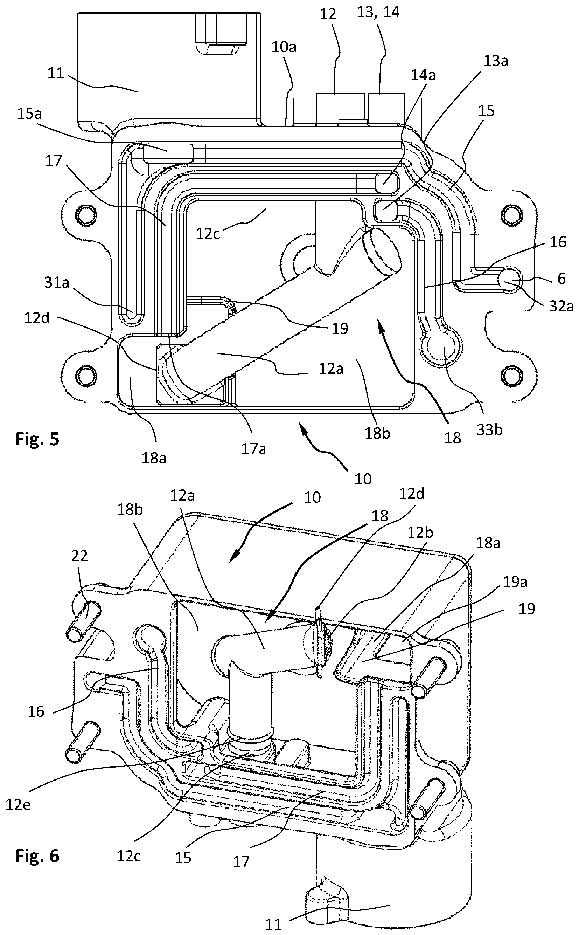

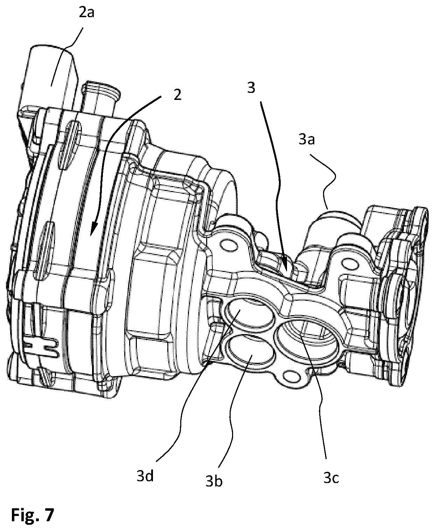

Die Ölwanne 1 weist ferner einen Ansaugkanal 12a auf, der in den Ölaufnahmeraum 18 reicht und der eine Öffnung 12b, über die Öl aus dem Ölaufnahmeraum 18 durch den Ansaugkanal 12a von der Pumpe 3 ansaugbar ist, aufweist. Der Ansaugkanal 12a ist in dem gezeigten Ausführungsbeispiel als Ansaugrohr ausgestaltet, das mit einem Ende in eine Kanalaufnahme 12c des Gehäuserahmens 10 eingesteckt ist. Ein Spalt zwischen einem Innenumfang der Kanalaufnahme 12c und einem Außenumfang des rohrförmigen Ansaugkanals 12a ist mittels einer Dichtung 12e (Figur 6) abgedichtet. Der Gehäuserahmen 10, insbesondere die Anschlusswand 10a, bildet einen Durchgang, der einen an der Außenseite des Gehäuserahmens 10 gebildeten ersten Pumpeneinlassanschluss 12 und die an der Innenseite des Gehäuserahmens 10 gebildete Kanalaufnahme 12c verbindet, wodurch Öl aus der Ölwanne 1 über den Ansaugkanal 12a und den Durchgang zum ersten Pumpeneinlassanschluss 12 förderbar ist. Dieser Durchgang kreuzt die Ölkanäle 15 und 17 (Figur 5). An den ersten Pumpeneinlassanschluss 12 ist ein erster Pumpeneinlass 3c (Figuren 7 und 8) der Pumpe 3 anschließbar oder angeschlossen. Dadurch kann die Pumpe 3 Öl aus dem Ölaufnahmeraum 18 ansaugen.

Das Gehäuse 10, 20, 30, insbesondere der Gehäuserahmen 10, weist eine Trennwand 19 auf, die den Ölaufnahmeraum 18 in eine erste Sektion 18a und eine zweite Sektion 18b unterteilt. Die zweite Sektion 18b weist ein kleineres Volumen als die erste Sektion 18a auf. Der Ansaugkanal 12a erstreckt sich von der Kanalaufnahme 12c durch die zweite Sektion 18b und die Trennwand 19 in die erste Sektion 18a. Die Ansaugöffnung 12b ist in der ersten Sektion 18a angeordnet. Dadurch wird Öl aus der ersten Sektion 18a angesaugt.

Die Trennwand 19 weist außerdem einen Durchgang 19a auf, der die erste und zweite Sektion 18a, 18b fluidkommunizierend miteinander verbindet. Der Durchgang 19a bewirkt einen gedrosselten Fluidaustausch zwischen den Sektionen 18a und 18b. Einerseits erlaubt der Durchgang 19a, dass Öl aus der zweiten Sektion 18b in die erste Sektion 18a fließt. Andererseits erlaubt der Durchgang 19a, dass Öl aus der ersten Sektion 18a in die zweite Sektion 18b fließen kann, beispielsweise wenn so viel Öl in die erste Sektion 18a gefördert wird, dass diese überfüllt werden würde.

An dem Gehäuserahmen 10, insbesondere der Anschlusswand 10a, ist eine Ölfilteraufnahme 11 integral gebildet, in die der Ölfilter 5 bzw. ein Ölfiltereinsatz eingesetzt werden kann. Die Ölfilteraufnahme 11 ist einerseits mit dem ersten Ölkanal 15 und andererseits mit dem Wärmetauscher 4 fluidkommunizierend verbunden. Dadurch kann Öl der ersten Flut bzw. des ersten Fluidkreislaufs von der Pumpe 3 über den Wärmetauscher 4 durch den in der Ölfilteraufnahme 11 angeordneten Ölfilter 5 in den ersten Ölkanal 15 gefördert werden. Mit dem Ölfilter 5 können Verunreinigungen im Öl, wie z. B. Abrieb, aus dem Ölkreislauf gefiltert werden. Die Ölfilteraufnahme 11 weist eine - in dem gezeigten Beispiel zylindrische - Umfangswand auf, in die der - ebenfalls beispielhaft zylindrische - Ölfilter 5 eingesetzt ist bzw. die den Ölfilter 5 über dessen Umfang umgibt. Die Umfangswand ist in Bezug auf die zur Pumpe 3 weisende Anschlusswand 10a so positioniert, dass eine Mittelachse der Umfangswand senkrecht oder in etwa senkrecht in Bezug auf die Anschlusswand 10a ist. Die Umfangswand der Ölfilteraufnahme 11 weist an ihrer von der Anschlusswand 10a weisenden Stirnseite eine Öffnung auf, durch die der Ölfilter 5 in die Umfangswand einsetzbar oder aus der Umfangswand zum Austausch entnehmbar ist. Die Öffnung wird durch einen am Wärmetauscher 4 gebildeten Deckel 4d verschlossen. Die Anschlusswand 10a oder der Gehäuserahmen 10 bildet ein der Öffnung entgegengesetztes Ende der Umfangswand. Der Deckel weist einen Durchgang auf, der den Wärmetauscher 4 fluidkommunizierend so mit der Ölfilteraufnahme 11 verbindet, dass Öl der ersten Flut aus dem Wärmetauscher 4 in die Ölfilteraufnahme 11 förderbar ist.

Die Umfangswand der Ölfilteraufnahme bildet an ihrer Außenseite einen oder mehrere Innengewindebuchsen, die ein Innengwinde aufweisen, in die Schraubenbolzen zur Befestigung des Deckels 4d und/oder des Wärmetauschers 4 an der Ölfilteraufnahme 11 eingeschraubt sind oder werden können (Figur 2).

Die Ölfilteraufnahme 11 ist über einen ersten Ölkanal 15 mit einem ersten Versorgungsauslass 31 und einem zweiten Versorgungsauslass 32 fluidkommunizierend verbunden. An die ersten und zweiten Versorgungsauslässe 31, 32 ist das Aggregat fluidkommunizierend angeschlossen, so dass Öl von der Ölfilteraufnahme 11 über den ersten Ölkanal 15 zu den Versorgungsauslässen 31, 32 und somit in das Aggregat förderbar ist. Für die begriffliche Unterscheidbarkeit kann der erste Ölkanal 15 optional als Aggregatversorgungskanal bezeichnet werden. Der erste Ölkanal 15 ist zwischen dem Gehäuserahmen 10 und dem damit gefügten Gehäusedeckel 30 gebildet. In der gezeigten Ausführung bilden der Gehäuserahmen 10 und der Gehäusedeckel 30 zusammen den ersten Ölkanal 15. Der Gehäuserahmen 10 weist an seiner zum Gehäusedeckel 30 weisenden Stirnseite einen in Kanallängsrichtung oder in Kanallaufrichtung rinnenförmig ausgebildeten Kanalabschnitt des ersten Ölkanals 15 auf. Der Gehäusedeckel 30 deckt den rinnenförmigen Kanalabschnitt des ersten Ölkanals 15 zur Bildung eines geschlossenen Kanalquerschnitts ab. In dem gezeigten Ausführungsbeispiel weist der Gehäusedeckel 30 ebenfalls einen rinnenförmigen Kanalabschnitt auf, der deckungsgleich mit dem rinnenförmigen Kanalabschnitt des Gehäuserahmens 10 ausgestaltet ist und der diesen abdeckt. Grundsätzlich sind aber auch Ausführungen möglich, in denen der Gehäusedeckel 30 in dem Abschnitt, der den rinnenförmigen Kanalabschnitt des Gehäuserahmens 10 abdeckt, flach ausgebildet ist, d. h. ohne rinnenförmige Ausgestaltung.

Der erste Ölkanal 15 verzweigt sich ausgehend von der Ölfilteraufnahme 11 bzw. einem Filterausgang 15a, an dem das Öl aus dem Ölfilter 5 in den ersten Ölkanal 15 eintritt, mit einem ersten Zweig zum ersten Versorgungsauslass 31 und mit einem zweiten Zweig zu einem zweiten Versorgungsauslass 32. Der erste Versorgungsauslass 31 befindet sich an oder über einer Übergabestelle, deren Position mit dem Bezugszeichen 31a in Figur 5 beispielhaft gezeigt wird. Der zweite Versorgungsauslass 32 befindet sich an oder über einer Übergabestelle, deren Position mit dem Bezugszeichen 32a in Figur 5 beispielhaft gezeigt wird. Das von der Pumpe 3 über den Ansaugkanal 12a angesaugte Fluid wird über einen ersten Pumpenauslass 3a, der fluidkommunizierend mit der Ölfilteraufnahme 11 verbunden ist, in die Ölfilteraufnahme 11 gefördert und dort von dem Ölfilter 5 von Verunreinigungen gefiltert. Das gefilterte Öl wird über den ersten Ölkanal 15 zu den Versorgungsauslässen 31, 32 gefördert und dem Aggregat zugeführt.

Zwischen dem ersten Pumpenauslass 3a und dem Ölfilter 5 bzw. der Ölfilteraufnahme 11 ist ein Wärmetauscher 4 angeordnet, der als Ölkühler dient. Der Wärmetauscher 4 weist einen ersten Pumpenauslassanschluss 4c auf, der mit dem rohr- oder stutzenförmigen Pumpenauslass 3a verbunden ist. Das von der Pumpe 3 über den ersten Pumpenauslass 3a zu der Ölfilteraufnahme 11 geförderte Öl durchströmt den Wärmetauscher 4 und gibt dort Wärmeenergie an ein Kühlmedium ab. Das Kühlmedium wird dem Wärmetauscher 4 über einen Kühlmitteleinlass 4a zugeführt und von dem Wärmetauscher 4 über einen Kühlmittelauslass 4b abgeführt. Die von dem Öl abgegebene Wärmeenergie wird im Wärmetauscher 4 auf das Kühlmittel, welches den Wärmetauscher 4 durchströmt, übertragen und mit dem Kühlmittel aus dem Wärmetauscher 4 abgeführt. Der Massenstrom des Kühlmittels durch den Wärmetauscher 4 kann beispielsweise mittels eines Ventils gesteuert werden, um die Temperatur des Öls im Ölfiltersystem einstellen zu können.

Das Gehäuse 10, 20, 30, insbesondere der Gehäuserahmen 10 weist in dem gezeigten Ausführungsbeispiel eine Sensoraufnahme 6a auf, in die ein Temperatursensor 6 eingesteckt werden kann (Figur 2), der so konfiguriert ist, dass er die Temperatur des Öls, das den ersten Ölkanal 15, insbesondere den zweiten Zweig des ersten Ölkanals 15 durchströmt, messen kann. Ein von dem Temperatursensor 6 ausgegebenes Signal, welches eine Information bzgl. der Öltemperatur enthält, kann an eine Steuerungseinheit oder eine Regelungseinheit ausgegeben werden, welche in Abhängigkeit von der gemessenen Temperatur das Ventil, welches den Massestrom des Kühlmittels durch den Wärmetauscher 4 steuert, ansteuert. Insbesondere kann das Ventil so angesteuert werden, dass der Massestrom durch den Wärmetauscher 4 verringert oder blockiert wird, wenn die vom Temperatursensor 6 gemessene Temperatur kleiner als eine Solltemperatur ist. Beispielsweise kann das Ventil so angesteuert werden, dass es den Massestrom des den Wärmetauscher 4 durchströmenden Kühlmittels in Gang setzt oder erhöht, wenn die vom Temperatursensor 6 gemessene Temperatur über der Solltemperatur des Öls liegt.

Die Ölwanne 1, insbesondere der Gehäusedeckel 30 und/oder der Gehäuserahmen 10, weist einen ersten Rückführeinlass 33 auf, mit dem Öl aus dem Aggregat in die Ölwanne 1 geführt werden kann. Der erste Rückführeinlass 33 ist an der Oberseite der Ölwanne 1 oder an der zum Aggregat weisenden Seite des Ölfiltermoduls angeordnet. Zwischen dem Gehäuserahmen 10 und dem Gehäusedeckel 30 ist ein zweiter Ölkanal 16 angeordnet oder gebildet, der den ersten Rückführeinlass 33 fluidkommunizierend mit einem zweiten Pumpeneinlassanschluss 13, der von dem Gehäuserahmen 10, insbesondere der Anschlusswand 10a, auf dessen Außenseite gebildet wird, verbindet. Ein von dem Gehäuserahmen 10, insbesondere der Anschlusswand 10a, gebildeter Durchgang, der den zweiten Pumpeneinlassanschluss 13 mit dem zweiten Ölkanal 16 fluidkommunizierend verbindet (Figur 9), kreuzt in dem gezeigten Beispiel den ersten Ölkanal 15 und einen dritten Ölkanal 17 und mündet an einer Durchgangsöffnung 13a in den zweiten Ölkanal 16 (Figur 5). Ein an der Pumpe 3 gebildeter zweiter Pumpeneinlass 3d (Figur 7) ist an den zweiten Pumpeneinlassanschluss 13 anschließbar oder angeschlossen. Dadurch kann in den ersten Rückführeinlass 33 aus dem Aggregat zurückgeführtes Öl über den zweiten Ölkanal 16 und den zweiten Pumpeneinlassanschluss 13 von der Pumpe 3 angesaugt werden. Für die begriffliche Unterscheidbarkeit kann der zweite Ölkanal 16 optional als Rückführansaugkanal bezeichnet werden. Der erste Rückführeinlass 33 befindet sich an einer Übergabestelle, deren Position mit dem Bezugszeichen 33b in Figur 5 beispielhaft gezeigt wird, in den Ölkanal 16.

Das von der Pumpe 3 über den zweiten Pumpeneinlass 3d angesaugte Öl wird über einen zweiten Pumpenauslass 3b der Pumpe 3 über einen dritten Ölkanal 17, der, beispielsweise mit einer in Figur 5 gezeigten Öffnung 17a, in den Ölaufnahmeraum 18, insbesondere dessen erste Sektion 18a, mündet, in die erste Sektion 18a gefördert. Für die begriffliche Unterscheidbarkeit kann der dritte Ölkanal 17 optional als Rückführversorgungskanal bezeichnet werden. Ein von dem Gehäuserahmen 10, insbesondere der Anschlusswand 10a, gebildeter Durchgang, der den zweiten Pumpenauslassanschluss 14 mit dem dritten Ölkanal 17 fluidkommunizierend verbindet (Figur 9), kreuzt in dem gezeigten Beispiel den ersten Ölkanal 15 und mündet an einer Durchgangsöffnung 14a in den dritten Ölkanal 17 (Figur 5). Der den zweiten Pumpenauslassanschluss 14 und den dritten Ölkanal 17 verbindende Durchgang ist zwischen dem ersten Ölkanal 15 und dem den zweiten Pumpeneinlassanschluss 13 und den zweiten Ölkanal 16 verbindenden Durchgang angeordnet.

Der Gehäuserahmen 10, insbesondere die Anschlusswand 10a, weist an seiner Außenseite einen Pumpenauslassanschluss 14 auf, der mit dem zweiten Pumpenauslass 3b der Pumpe 3 verbindbar oder verbunden ist. Der Pumpenauslassanschluss 14 ist über den dritten Ölkanal 17 fluidkommunizierend mit der ersten Sektion 18a verbunden.

Der Gehäuserahmen 10 und der Gehäusedeckel 30 bilden zusammen jeweils den zweiten Ölkanal 16 und den dritten Ölkanal 17. Der Gehäuserahmen 10 weist an seiner zum Gehäusedeckel 30 weisenden Stirnseite einen in Kanallaufrichtung zum Gehäusedeckel 30 hin offenen rinnenförmigen Kanalabschnitt auf, der durch den Gehäusedeckel 30, insbesondere einen flachen oder rinnenförmigen Kanalabschnitt, zur Bildung eines geschlossenen Kanalquerschnitts abgedeckt wird. Gleiches gilt sinngemäß für den dritten Ölkanal 17. D. h., dass der Gehäuserahmen 10 an seiner zum Gehäusedeckel 30 weisenden Stirnseite einen zum Gehäusedeckel 30 in Kanallaufrichtung offenen, rinnenförmigen Kanalabschnitt aufweist, der von dem Gehäusedeckel 30 zur Bildung eines geschlossenen Kanalquerschnitts abgedeckt wird.

In dem gezeigten Ausführungsbeispiel sind die Ölkanäle 15, 16, 17 jeweils durch einen rinnenförmigen Kanalabschnitt, der an dem Gehäuserahmen 10 geformt ist, und den Gehäusedeckel 30, der die rinnenförmigen Kanalabschnitte abdeckt, gebildet. Eine solche Ausführung erlaubt die platzsparende Bauweise und einfache Herstellung der Ölkanäle 15, 16, 17.

Bei der in der Figur 7 gezeigten Pumpe 3 handelt es sich um eine zweiflutige Pumpe mit zwei getrennten Fluidkreisläufen bzw. Fluten. Die Pumpe 3 weist einen ersten Pumpensatz P₁ für die erste Flut und einen zweiten Pumpensatz P₂ für die zweite Flut auf. Der erste Pumpensatz P₁ und der zweite Pumpensatz P₂ sind - wie in Figur 8 gezeigt - jeweils als Innenzahnradpumpe ausgebildet. Die ersten und zweiten Pumpensätze P₁, P₂ umfassen jeweils ein inneres Zahnrad, das verdrehfest auf der Antriebswelle 3f sitzt und eine Außenverzahnung aufweist, und ein äußeres Zahnrad, das eine Innenverzahnung, die an einer Stelle des Umfangs mit der Außenverzahnung kämmt, aufweist. Eine Drehachse des äußeren Zahnrads ist versetzt zur Mittelachse der Antriebswelle 3f angeordnet. Die Pumpe 3 kann den ersten Fluidkreislauf über den Pumpeneinlass 3c zu dem Pumpenauslass 3a fördern. Zusätzlich kann die Pumpe 3 den zweiten Fluidkreislauf, der von dem ersten Fluidkreislauf getrennt ist und beispielsweise für den Lenzbetrieb ausgelegt ist, von dem zweiten Pumpeneinlass 3d zu dem zweiten Pumpenauslass 3b fördern. Die Pumpe 3 kann insbesondere zwei Förderelemente, eines für den ersten Fluidkreislauf und eines für den zweiten Fluidkreislauf, aufweisen. Alternativ können statt einer zweiflutigen Pumpe zwei voneinander getrennte Pumpen vorgesehen sein. Die in Figur 7 gezeigte Pumpe 3 wird von einem an ihr angeordneten Antrieb 2 angetrieben. Bei dem Antrieb 2 handelt es sich um einen Elektromotor. Der Antrieb 2 kann eine Steckeraufnahme 2a aufweisen, an die eine Stromversorgung zum Antrieb der Pumpe 3 anschließbar ist.

Die Ölwanne 1, insbesondere der Gehäuserahmen 10 und/oder der Gehäusedeckel 30, weist an seiner Oberseite oder der zum Aggregat weisenden Seite einen zweiten Rückführeinlass 34 auf, der direkt in die erste Sektion 18a der Ölwanne 18 mündet. Dadurch kann Öl aus dem Aggregat direkt und/oder schwerkraftbedingt in die erste Sektion 18a zurückfließen, ohne dass es von der Pumpe 3 in die erste Sektion 18a gefördert werden bzw. den Weg über die Pumpe 3 nehmen muss. Zwischen dem zweiten Rückführeinlass 34 und der Ansaugöffnung 12b des Ansaugkanals 12a ist ein, beispielsweise plattenförmiger, Abweiser 12d angeordnet, der so konfiguriert ist, dass er das über den zweiten Rückführeinlass 34 in die erste Sektion 18a zurückfließende Fluid daran hindert, direkt die Ansaugöffnung 12b anzuströmen. Dadurch wird bewirkt, dass das zurückfließende Öl sich einerseits beruhigen kann und andererseits die Einbringung von Luft in das sich bereits in der ersten Sektion 18a befindliche Öl verringert. Der, insbesondere von oder an dem Ansaugkanal 12a gebildete, Abweiser 12d kann beispielsweise plattenförmig und/oder oberhalb der Ansaugöffnung 12b oder - wie in der in den Figuren dargestellten Ausführungsform - kragenförmig um das ansaugseitige Ende des Ansaugrohrs 12a umlaufend ausgebildet sein. Der Abweiser 12d kann sich parallel oder in etwa parallel zum Gehäuseboden 20 erstrecken.

In dem ersten Rückführeinlass 33 ist ein Sieb 33a so angeordnet, dass es von dem aus dem Aggregat in den ersten Rückführeinlass 33 zurückfließenden Öl durchströmt wird. Insbesondere kann das Sieb 33a den vollen Strömungsquerschnitt des ersten Rückführeinlasses 33 überspannen.

In dem zweiten Rückführeinlass 34 ist ein Sieb 34a so angeordnet, dass es von dem aus dem Aggregat in den zweiten Rückführeinlass 34 strömenden Öl durchströmt wird. Insbesondere kann das Sieb 34a den gesamten Strömungsquerschnitt des zweiten Rückführeinlasses 34 überspannen.

Der Pumpeneinlassanschluss 13 kann in den zweiten Pumpeneinlass 3d eingesteckt sein. Der zwischen dem Außenumfang des Pumpeneinlassanschlusses 13 und dem Innenumfang des Pumpeneinlasses 3d gebildete Spalt kann mittels einer Dichtung 3e abgedichtet sein. Der Pumpenauslassanschluss 14 kann in den Pumpenauslass 3b eingesteckt sein. Der zwischen einem Außenumfang des Pumpenauslassanschlusses 14 und einem Innenumfang des Pumpenauslasses 3b gebildete Spalt kann mittels einer Dichtung 3e abgedichtet sein.

Der Pumpeneinlassanschluss 12 kann in den Pumpeneinlass 3c eingesteckt sein. Der zwischen einem Außenumfang des Pumpeneinlassanschlusses 12 und einem Innenumfang des Pumpeneinlasses 3c gebildeter Spalt kann mittels einer Dichtung 3e abgedichtet sein. Die Dichtungen 3e können beispielsweise ein Dichtring oder O-Ring ausgebildet sein.

Der Strömungsquerschnitt des zweiten Rückführeinlasses 34 ist größer als der Strömungsquerschnitt des ersten Rückführeinlasses 33.

Die Pumpe 3 ist in geometrischer oder struktureller Hinsicht zwischen dem Antrieb 2 und der Ölfilteraufnahme 11 positioniert. Die aus dem Antrieb 2 und der Pumpe 3 gebildete Antriebs-Pumpeneinheit weist eine Antriebswelle 3f für die Pumpe 3 auf. In dem gezeigten Beispiel ist die Antriebswelle 3f konzentrisch zu einem Rotor des Antriebs 2 angeordnet und eine gemeinsame, durchgehende Welle des Antriebs 2 und der Pumpe 3. Beispielsweise kann eine gedachte Verlängerung oder eine Längsachse der Antriebswelle 3f durch die Ölfilteraufnahme 11 verlaufen und/oder senkrecht zur Mittelachse des Ölfilteraufnahme 11 angeordnet sein.

In der vorgesehenen Einbaulage in einem Kraftfahrzeug ist die Antriebswelle 3f in Bezug auf das Schwerefeld der Erde horizontal bzw. in Bezug auf die Hochachse des Ölfördermoduls 100 oder der Ölwanne 1 quer, insbesondere senkrecht angeordnet. Die Antriebswelle 3f kann sich in Richtung zwischen den beiden die Anschlusswand 10a begrenzenden Seitenwandabschnitten des Gehäuserahmens 10 parallel oder in etwa parallel zu der Anschlusswand 10a und/oder parallel zu einem oder beiden aus Gehäusedeckel 30 und Gehäuseboden 20 erstrecken. Wie am besten aus Figur 9 erkennbar ist, ist die Antriebswelle 3f innerhalb einer senkrechten Projektion der Anschlusswand 10a und/oder zwischen Ebenen, die von dem Gehäusedeckel 30 und dem Gehäuseboden 20 aufgespannt werden, angeordnet. Dadurch ergibt sich eine kompakte und flache Bauweise des Ölfördermoduls 100, das dadurch auch bei Fahrzeugen mit niedrigem Schwerpunkt, beispielsweise Sportwagen, Anwendung finden kann.

Die Pumpe 3 weist den ersten Pumpeneinlass 3c, über den aus der Ölwanne 1 Öl in die Pumpe 3, d. h. den ersten Pumpensatz P₁, förderbar ist, und den ersten Pumpenauslass 3a, über den Öl aus der Pumpe 3, d. h. dem ersten Pumpensatz P₁ in den Wärmetauscher 4 förderbar ist, auf. Der erste Pumpeneinlass 3c oder eine Einlasskanalmittelachse M₁ des ersten Pumpeneinlasses 3c (Figur 8), und der erste Pumpenauslass 3a oder eine Auslasskanalmittelachse M₂ des ersten Pumpenauslasses 3a, sind in einer Linie und senkrecht zu der Antriebswelle 3f angeordnet. Insbesondere bilden der erste rohr- oder stutzenförmige Pumpeneinlassanschluss 12 und der erste Pumpeneinlass 3c die Einlasskanallängsachse M₁ und der erste rohr- oder stutzenförmige Pumpenauslass 3a und der erste Pumpenauslassanschluss 4c die Auslasskanallängsachse M₂.

Der erste Pumpensatz P₁ für die erste Flut und der zweite Pumpensatz P₂ für die zweite Flut sind entlang der Antriebswelle 3f zueinander versetzt angeordnet. Zwischen dem ersten Pumpensatz P₁ und einem vom ersten Einlassanschluss 3c entlang der Einlasskanalmittelachse M₁ verlaufenden Einlasskanal ist eine Einlassöffnung gebildet sein, die den Einlasskanal mit einem Saugbereich des ersten Pumpensatzes P₁ verbindet. Zwischen dem ersten Pumpensatz P₁ und einem vom ersten Auslassanschluss 3a entlang der Auslasskanalmittelachse M₂ verlaufenden Auslasskanal kann eine Auslassöffnung gebildet sein, die den Auslasskanal mit einem Druckbereich des ersten Pumpensatzes P₁ verbindet. Der Einlasskanal 3c und der Auslasskanal 3a und/oder die Einlasskanalmittelachse M₁ und die Auslasskanalmittelachse M₂ sind bezogen auf die Längsrichtung der Antriebswelle 3f zwischen dem ersten und zweiten Pumpensatz P₁, P₂ angeordnet.

**Bezugszeichenliste**

| | | | |
|---|---|---|---|
| 1 | Ölwanne | 15 | (erster) Ölkanal / Aggregatversorgungskanal |
| 2 | Antrieb | | |
| 2a | Steckeraufnahme | 15a | Filterausgang |
| 3 | Pumpe | 16 | (zweiter) Ölkanal / Rückführansaugkanal |
| 3a | (erster) Pumpenauslass | | |
| 3b | (zweiter) Pumpenauslass | 17 | (dritter) Ölkanal / Rückführversorgungskanal |
| 3c | (erster) Pumpeneinlass | | |
| 3d | (zweiter) Pumpeneinlass | 17a | Öffnung |
| 3e | Dichtungen | 18 | Ölaufnahmeraum |
| 3f | Antriebswelle | 18a | erste Sektion |
| 3g | Schraubenbolzen | 18b | zweite Sektion |
| 4 | Wärmetauscher | 19 | Trennwand |
| 4a | Kühlmitteleinlass | 19a | Durchgang |
| 4b | Kühlmittelauslass | | |
| 4c | erster Pumpenauslassanschluss | 20 | Gehäuseboden |
| 4d | Deckel | 21 | Ölablasseinrichtung / Ölablassschraube |
| 5 | Ölfilter | | |
| 6 | Temperatursensor | 22 | Schraubenbolzen |
| 6a | Sensoraufnahme | | |
| | | 30 | Gehäusedeckel |
| 10 | Gehäuserahmen | 31 | erster Versorgungsauslass |
| 10a | Anschlusswand | 31a | Übergabestelle |
| 11 | Ölfilteraufnahme | 32 | zweiter Versorgungsauslass |
| 12 | (erster) Pumpeneinlassanschluss | 32a | Übergabestelle |
| 12a | Ansaugkanal / Ansaugstutzen / Ansaugrohr | 33 | (erster) Rückführeinlass |
| | | 33a | Sieb |
| 12b | Öffnung / Ansaugöffnung | 33b | Übergabestelle |
| 12c | Kanalaufnahme | 34 | (zweiter) Rückführeinlass |
| 12d | Abweiser | 34a | Sieb |
| 12e | Dichtung | | |
| 13 | (zweiter) Pumpeneinlassanschluss | 100 | Ölfördermodul |
| 13a | Durchgangsöffnung | | |
| 14 | zweiter Pumpenauslassanschluss | P₁ | erster Pumpensatz |
| 14a | Durchgangsöffnung | P₂ | zweiter Pumpensatz |
| | | M₁ | erste Einlasskanalmittelachse |
| | | M₂ | erste Auslasskanalmittelachse |

## Patentansprüche

1. Ölfördermodul (100), insbesondere zur Versorgung eines Aggregats für ein Kraftfahrzeug mit Öl, wobei das Ölfördermodul (100) Folgendes umfasst:
eine Ölwanne (1), eine Pumpe (3) und einen Wärmetauscher (4), wobei die Pumpe (3), insbesondere geometrisch, zwischen dem Wärmetauscher (4) und der Ölwanne (1) angeordnet ist,
**dadurch gekennzeichnet, dass**
die Pumpe (3) von einem an ihr angeordneten, als Elektromotor ausgebildeten Antrieb (2) antreibbar ist.

2. Ölfördermodul (100) nach Anspruch 1, wobei die Ölwanne (1) ein Gehäuse mit einem Gehäuserahmen (10) und einem mit dem Gehäuserahmen (10) gefügten Verschlussteil, wie z. B. einen Gehäusedeckel (30), aufweist, wobei der Gehäuserahmen (10) eine umlaufende Seitenwand bildet, die einen Ölaufnahmeraum (18) umfangsseitig einfasst und einen als Anschlusswand (10a) ausgebildeten Seitenwandabschnitt aufweist, an der die Pumpe (3) angeordnet ist.

3. Ölfördermodul (100) nach dem vorhergehenden Anspruch, wobei der Wärmetauscher (4) einen ersten Pumpenauslassanschluss (4c), die Anschlusswand (10a) einen ersten Pumpeneinlassanschluss (12) und die Pumpe (3) einen ersten Pumpeneinlass (3c), der mit dem Pumpeneinlassanschluss (12) verbunden ist, und einen ersten Pumpenauslass (3a), der mit dem Pumpenauslassanschluss (4c) verbunden ist, aufweisen, wobei mittels der Pumpe (3) Öl aus der Ölwanne (1) in den Wärmetauscher (4) förderbar ist, wobei bevorzugt ist, dass der erste beispielsweise rohr- oder stutzenförmige Pumpeneinlassanschluss (12) und/oder der erste Pumpeneinlass (3c) eine Einlasskanallängsachse (M₁) und der erste beispielsweise rohr- oder stutzenförmige Pumpenauslass (3a) und/oder der erste Pumpenauslassanschluss (4c) eine Auslasskanallängsachse (M₂) bilden, und wobei die Einlasskanallängsachse (M₁) und die Auslasskanallängsachse (M₂) parallel zueinander oder in einer Flucht zueinander angeordnet sind.

4. Ölfördermodul (100) nach einem der vorhergehenden Ansprüche, wobei die Pumpe (3) einen ersten Pumpeneinlass (3c), über den, insbesondere aus der Ölwanne (1), Öl in die Pumpe (3) förderbar ist, und einen ersten Pumpenauslass (3a), über den Öl aus der Pumpe (3), insbesondere in den Wärmetauscher (4) förderbar ist, aufweist, wobei der erste Pumpeneinlass (3c) und der erste Pumpenauslass (3a) in einer Linie und/oder senkrecht zu einer Antriebswelle (3f) der Pumpe (3) angeordnet sind.

5. Ölfördermodul (100) nach einem der vorhergehenden Ansprüche, wobei von der Ölwanne (1), insbesondere an einem Gehäuserahmen (10) oder einer Anschlusswand (10a) des Gehäuserahmens (10), eine Ölfilteraufnahme (11) zur Aufnahme eines Ölfilters (5) gebildet ist, und die Ölfilteraufnahme (11) einerseits mit einem Ölkanal (15) der Ölwanne (1) und andererseits mit dem Wärmetauscher (4) verbunden ist, wodurch Öl aus dem Wärmetauscher (4) über die Ölfilteraufnahme (11) in den Ölkanal (15) förderbar ist.

6. Ölfördermodul (100) nach dem vorhergehenden Anspruch, wobei die Ölfilteraufnahme (11) eine von der Ölwanne (1) gebildete, insbesondere zylindrische, Umfangswand aufweist, die den, insbesondere zylindrischen, Ölfilter (5) über dessen Umfang umgibt und von einem von dem Wärmetauscher (4) gebildeten Deckel (4d) stirnseitig verschlossen ist.

7. Ölfördermodul (100) nach dem vorhergehenden Anspruch, wobei eine Mittelachse der Umfangswand in Bezug auf die Anschlusswand (10a) und/oder eine Antriebswelle (3f) der Pumpe (3) senkrecht steht.

8. Ölfördermodul (100) nach einem der Ansprüche 5 bis 7, wobei die Ölwanne (1) mindestens einen zur Ölversorgung des Aggregats ausgebildeten Versorgungsauslass (31, 32) aufweist, wobei der Ölkanal (15) die Ölfilteraufnahme (11) mit dem mindestens einen Versorgungsauslass (31, 32) verbindet, so dass durch die Ölfilteraufnahme (11) fließendes Öl über den Ölkanal (15) zu dem mindestens einen Versorgungsauslass (31, 32) förderbar ist.

9. Ölfördermodul (100) nach einem der vorhergehenden Ansprüche, wobei der Antrieb (2) zwischen der Ölwanne (1) und dem Wärmetauscher (4) und/oder die Pumpe (3) zwischen einer Ölfilteraufnahme (11) und dem Antrieb (2) positioniert ist.

10. Ölfördermodul (100) nach einem der vorhergehenden Ansprüche, wobei die Anschlusswand (10a) einen zweiten Pumpeneinlassanschluss (13) und einen zweiten Pumpenauslassanschluss (14) und die Pumpe (3) einen zweiten Pumpeneinlass (3d), der mit dem zweiten Pumpeneinlassanschluss (13) verbunden ist, und einen zweiten Pumpenauslass (3b), der mit dem Pumpenauslassanschluss (14) verbunden ist, aufweist, wobei die Pumpe (3) so ausgebildet ist, dass sie Öl vom zweiten Pumpeneinlass (3d) zum zweiten Pumpenauslass (3b) fördern kann.

11. Ölfördermodul (100) nach dem vorhergehenden Anspruch, wobei die Ölwanne (1) mindestens einen zur Rückführung von Öl aus dem Aggregat ausgebildeten Rückführeinlass (33) und einen Ölkanal (16) aufweist, der den Rückführeinlass (33) mit dem zweiten Pumpeneinlassanschluss (13) verbindet, und/oder wobei die Ölwanne (1) einen Ölkanal (17) aufweist, der den Pumpenauslassanschluss (14) mit einem Ölaufnahmeraum (18), beispielsweise einer ersten Sektion (18a) des Ölaufnahmeraums (18), verbindet.

12. Ölfördermodul (100) nach einem der vorhergehenden Ansprüche, wobei die Pumpe (3) zweiflutig ausgebildet und das Ölfördermodul (100) so konfiguriert ist, dass Öl aus einem Aufnahmeraum (18) der Ölwanne (1) mit einer ersten Flut der Pumpe (3) über den Wärmetauscher (4) und einen Ölfilter (5) zu mindestens einem Versorgungsauslass (31, 32) der Ölwanne (1) zur Versorgung eines Aggregats mit Öl förderbar ist, und Öl von einem Rückführeinlass (33) der Ölwanne (1) mit einer zweiten Flut der Pumpe (3) in den Aufnahmeraum (18) förderbar ist.

13. Ölfördermodul (100) nach einem der vorhergehenden Ansprüche, wobei die Pumpe (3) an der Ölwanne (1), insbesondere der Anschlusswand (10a) der Ölwanne (1), befestigt ist, beispielsweise mittels mehrerer Schraubenbolzen, und der Wärmetauscher (4) sowohl an einer Ölfilteraufnahme (11) der Ölwanne (1) als auch an der Pumpe (3) und/oder deren Antrieb (2) befestigt ist, beispielsweise mittels mehrerer Schraubenbolzen.

14. Ölfördermodul (100) nach einem der vorhergehenden Ansprüche, wobei die Pumpe (3) auf einer zum Wärmetauscher (4) weisenden ersten Seite einen ersten Pumpenauslass (3a) und auf einer zur Ölwanne (1) weisenden zweiten Seite, die der ersten Seite entgegengesetzt ist, einen zweiten Pumpenauslass (3b), einen ersten Pumpeneinlass (3c) und einen zweiten Pumpeneinlass (3d) aufweist.

15. Ölfördermodul (100) nach einem der vorhergehenden Ansprüche, wobei eine Antriebswelle (3f) der Pumpe (3) parallel zu einem Gehäusedeckel (30) oder Gehäuseboden (20) der Ölwanne (1) und/oder zwischen von dem Gehäusedeckel (30) und dem Gehäuseboden (20) aufgespannten Ebenen angeordnet ist.

## Claims

1. An oil delivery module (100), in particular for supplying an assembly of a motor vehicle, with oil, the oil delivery module (100) comprising:
an oil sump (1), a pump (3) and a heat exchanger (4), wherein the pump (3) is arranged, in particular geometrically, between the heat exchanger (4) and the oil sump (1),
**characterised in that**
the pump (3) can be driven by a drive (2) which is arranged on it and embodied as an electric motor.

2. The oil delivery module (100) according to claim 1, wherein the oil sump (1) comprises a housing comprising a housing frame (10) and a closure part such as for example a housing cover (30) which is joined to the housing frame (10), wherein the housing frame (10) forms a circumferential side wall which encloses an oil accommodating space (18) on its circumferential side and comprises a side wall portion which is embodied as a connecting wall (10a) and on which the pump (3) is arranged.

3. The oil delivery module (100) according to the preceding claim, wherein the heat exchanger (4) comprises a first pump outlet port (4c), the connecting wall (10a) comprises a first pump inlet port (12), and the pump (3) comprises a first pump inlet (3c), which is connected to the pump inlet port (12), and a first pump outlet (3a) which is connected to the pump outlet port (4c), wherein oil can be delivered from the oil sump (1) into the heat exchanger (4) by means of the pump (3), wherein preferably, the first pump inlet port (12) which is for example tubular or socket-shaped and/or the first pump inlet (3c) form an inlet channel longitudinal axis (M₁) and the first pump outlet (3a) which is for example tubular or socket-shaped and/or the first pump outlet port (4c) form an outlet channel longitudinal axis (M₂), and wherein the inlet channel longitudinal axis (M₁) and the outlet channel longitudinal axis (M₂) are arranged parallel to each other or flush with each other.

4. The oil delivery module (100) according to any one of the preceding claims, wherein the pump (3) comprises a first pump inlet (3c) via which oil can be delivered into the pump (3), in particular from the oil sump (1), and a first pump outlet (3a) via which oil can be delivered from the pump (3), in particular into the heat exchanger (4), wherein the first pump inlet (3c) and the first pump outlet (3a) are arranged in a line and/or perpendicular to a drive shaft (3f) of the pump (3).

5. The oil delivery module (100) according to any one of the preceding claims, wherein an oil filter receptacle (11) for accommodating an oil filter (5) is formed by the oil sump (1), in particular on a housing frame (10) or on a connecting wall (10a) of the housing frame (10), and the oil filter receptacle (11) is connected on the one hand to an oil channel (15) of the oil sump (1) and on the other hand to the heat exchanger (4), whereby oil can be delivered from the heat exchanger (4) into the oil channel (15) via the oil filter receptacle (11).

6. The oil delivery module (100) according to the preceding claim, wherein the oil filter receptacle (11) comprises a circumferential wall, in particular a cylindrical circumferential wall, which is formed by the oil sump (1) and which surrounds the oil filter (5), which is in particular a circumferential oil filter, over its circumference and is closed off on its front-facing side by a cover (4d) formed by the heat exchanger (4).

7. The oil delivery module (100) according to the preceding claim, wherein a centre axis of the circumferential wall is perpendicular in relation to the connecting wall (10a) and/or a drive shaft (3f) of the pump (3).

8. The oil delivery module (100) according to any one of claims 5 to 7, wherein the oil sump (1) comprises at least one supply outlet (31, 32) which is embodied to supply oil to the assembly, wherein the oil channel (15) connects the oil filter receptacle (11) to the at least one supply outlet (31, 32), such that oil which flows through the oil filter receptacle (11) can be delivered to the at least one supply outlet (31, 32) via the oil channel (15).

9. The oil delivery module (100) according to any one of the preceding claims, wherein the drive (2) is positioned between the oil sump (1) and the heat exchanger (4) and/or the pump (3) is positioned between an oil filter receptacle (11) and the drive (2).

10. The oil delivery module (100) according to any one of the preceding claims, wherein the connecting wall (10a) comprises a second pump inlet port (13) and a second pump outlet port (14) and the pump (3) comprises a second pump inlet (3d), which is connected to the second pump inlet port (13), and a second pump outlet (3b) which is connected to the pump outlet port (14), wherein the pump (3) is embodied such that it can deliver oil from the second pump inlet (3d) to the second pump outlet (3b).

11. The oil delivery module (100) according to the preceding claim, wherein the oil sump (1) comprises at least one feedback inlet (33), which is embodied to feed oil back from the assembly, and an oil channel (16) which connects the feedback inlet (33) to the second pump inlet port (13), and/or wherein the oil sump (1) comprises an oil channel (17) which connects the pump outlet port (14) to an oil accommodating space (18), for example a first section (18a) of the oil accommodating space (18).

12. The oil delivery module (100) according to any one of the preceding claims, wherein the pump (3) is embodied as a dual-flux pump and the oil delivery module (100) is configured such that oil can be delivered from an accommodating space (18) of the oil sump (1) to at least one supply outlet (31, 32) of the oil sump (1), for supplying an assembly with oil, via the heat exchanger (4) and an oil filter (5) in a first flux of the pump (3), and oil can be delivered from a feedback inlet (33) of the oil sump (1) into the oil accommodating space (18) in a second flux of the pump (3).

13. The oil delivery module (100) according to any one of the preceding claims, wherein the pump (3) is fastened to the oil sump (1), in particular the connecting wall (10a) of the oil sump (1), for example by means of multiple stud bolts, and the heat exchanger (4) is fastened both to an oil filter receptacle (11) of the oil sump (1) and to the pump (3) and/or its drive (2), for example by means of multiple stud bolts.

14. The oil delivery module (100) according to any one of the preceding claims, wherein the pump (3) comprises: a first pump outlet (3a) on a first side which points towards the heat exchanger (4); a second pump outlet (3b) on a second side which is opposite to the first side and points towards the oil sump (1); a first pump inlet (3c) and a second pump inlet (3d).

15. The oil delivery module (100) according to any one of the preceding claims, wherein a drive shaft (3f) of the pump (3) is arranged parallel to a housing cover (30) or housing base (20) of the oil sump (1) and/or between planes spanned by the housing cover (30) and the housing base (20).

## Revendications

1. Module de refoulement d'huile (100), en particulier pour alimenter en huile un ensemble pour un véhicule automobile, ledit module de refoulement d'huile (100) comprenant :
un carter d'huile (1), une pompe (3) et un échangeur de chaleur (4), la pompe (3) étant disposée, en particulier de manière géométrique, entre l'échangeur de chaleur (4) et le carter d'huile (1),
**caractérisé en ce que**
la pompe (3) peut être entraînée par un entraînement (2) disposé sur la pompe (3) et réalisé comme un moteur électrique.

2. Module de refoulement d'huile (100) selon la revendication 1, dans lequel le carter d'huile (1) présente un boîtier comportant un cadre de boîtier (10) et un élément de fermeture joint au cadre de boîtier (10), tel qu'un couvercle de boîtier (30), le cadre de boîtier (10) formant une paroi latérale circonférentielle qui entoure un espace de réception d'huile (18) sur la circonférence et présente une partie de paroi latérale réalisée comme une paroi de raccordement (10a) sur laquelle la pompe (3) est disposée.

3. Module de refoulement d'huile (100) selon la revendication précédente, dans lequel l'échangeur de chaleur (4) présente un premier raccord de sortie de pompe (4c), la paroi de raccordement (10a) présentant un premier raccord d'entrée de pompe (12), la pompe (3) présentant une première entrée de pompe (3c) reliée au raccord d'entrée de pompe (12) et une première sortie de pompe (3a) reliée au raccord de sortie de pompe (4c), de l'huile pouvant être refoulée depuis le carter d'huile (1) vers et dans l'échangeur de chaleur (4) au moyen de la pompe (3), le premier raccord d'entrée de pompe (12), qui est par exemple tubulaire ou en forme de manchon, et / ou la première entrée de pompe (3c) formant de préférence un axe longitudinal de canal d'entrée (M₁), et la première sortie de pompe (3a), qui est par exemple tubulaire ou en forme de manchon, et / ou le premier raccord de sortie de pompe (4c) formant de préférence un axe longitudinal de canal de sortie (M₂), l'axe longitudinal de canal d'entrée (M₁) et l'axe longitudinal de canal de sortie (M₂) étant disposés de manière parallèle ou alignée l'un à l'autre.

4. Module de refoulement d'huile (100) selon l'une quelconque des revendications précédentes, dans lequel la pompe (3) présente une première entrée de pompe (3c) par laquelle de l'huile peut être refoulée vers et dans la pompe (3), en particulier depuis le carter d'huile (1), et une première sortie de pompe (3a) par laquelle de l'huile peut être refoulée depuis la pompe (3), en particulier vers et dans l'échangeur de chaleur (4), la première entrée de pompe (3c) et la première sortie de pompe (3a) étant disposées en ligne et / ou de manière perpendiculaire à un arbre d'entraînement (3f) de la pompe (3).

5. Module de refoulement d'huile (100) selon l'une quelconque des revendications précédentes, dans lequel un réceptacle de filtre à huile (11) pour recevoir un filtre à huile (5) est formé par le carter d'huile (1), en particulier sur un cadre de boîtier (10) ou sur une paroi de raccordement (10a) du cadre de boîtier (10), le réceptacle de filtre à huile (11) étant relié d'une part à un canal d'huile (15) du carter d'huile (1) et d'autre part à l'échangeur de chaleur (4), de sorte que de l'huile peut être refoulée depuis l'échangeur de chaleur (4) vers et dans le canal d'huile (15) par le réceptacle de filtre à huile (11).

6. Module de refoulement d'huile (100) selon la revendication précédente, dans lequel le réceptacle de filtre à huile (11) présente une paroi circonférentielle, en particulier une paroi circonférentielle cylindrique, formée par le carter d'huile (1) et entourant le filtre à huile (5), qui est en particulier cylindrique, sur sa circonférence et fermée à la face frontale par un couvercle (4d) formé par l'échangeur de chaleur (4).

7. Module de refoulement d'huile (100) selon la revendication précédente, dans lequel un axe central de la paroi circonférentielle est perpendiculaire à la paroi de raccordement (10a) et / ou à un arbre d'entraînement (3f) de la pompe (3).

8. Module de refoulement d'huile (100) selon l'une quelconque des revendications 5 à 7, dans lequel le carter d'huile (1) présente au moins une sortie d'alimentation (31, 32) réalisée pour alimenter l'ensemble en huile, le canal d'huile (15) reliant le réceptacle de filtre à huile (11) à ladite au moins une sortie d'alimentation (31, 32), de telle sorte que de l'huile s'écoulant à travers le réceptacle de filtre à huile (11) peut être refoulée vers ladite au moins une sortie d'alimentation (31, 32) par le canal d'huile (15).

9. Module de refoulement d'huile (100) selon l'une quelconque des revendications précédentes, dans lequel l'entraînement (2) est positionné entre le carter d'huile (1) et l'échangeur de chaleur (4) et / ou la pompe (3) est positionnée entre un réceptacle de filtre à huile (11) et l'entraînement (2).

10. Module de refoulement d'huile (100) selon l'une quelconque des revendications précédentes, dans lequel la paroi de raccordement (10a) présente un second raccord d'entrée de pompe (13) et un second raccord de sortie de pompe (14), la pompe (3) présentant une seconde entrée de pompe (3d) reliée au second raccord d'entrée de pompe (13) et une seconde sortie de pompe (3b) reliée au raccord de sortie de pompe (14), la pompe (3) étant réalisée de telle sorte qu'elle peut refouler de l'huile depuis la seconde entrée de pompe (3d) vers la seconde sortie de pompe (3b).

11. Module de refoulement d'huile (100) selon la revendication précédente, dans lequel le carter d'huile (1) présente au moins une entrée de retour (33) réalisée pour renvoyer de l'huile depuis l'ensemble et un canal d'huile (16) reliant l'entrée de retour (33) au second raccord d'entrée de pompe (13) et / ou le carter d'huile (1) présente un canal d'huile (17) reliant le raccord de sortie de pompe (14) à un espace de réception d'huile (18), par exemple à une première section (18a) de l'espace de réception d'huile (18).

12. Module de refoulement d'huile (100) selon l'une quelconque des revendications précédentes, dans lequel la pompe (3) est réalisée à deux flux et le module de refoulement d'huile (100) est configuré de telle sorte que de l'huile peut être refoulée depuis un espace de réception (18) du carter d'huile (1) vers au moins une sortie d'alimentation (31, 32) du carter d'huile (1) par l'échangeur de chaleur (4) et un filtre à huile (5) via un premier flux de la pompe (3) pour alimenter un ensemble en huile, et que de l'huile peut être refoulée depuis une entrée de retour (33) du carter d'huile (1) vers et dans l'espace de réception (18) via un second flux de la pompe (3).

13. Module de refoulement d'huile (100) selon l'une quelconque des revendications précédentes, dans lequel la pompe (3) est fixée au carter d'huile (1), en particulier à la paroi de raccordement (10a) du carter d'huile (1), par exemple au moyen de plusieurs boulons filetés, et l'échangeur de chaleur (4) est fixé à un réceptacle de filtre à huile (11) du carter d'huile (1) et à la pompe (3) et / ou à l'entraînement (2) de la pompe (3), par exemple au moyen de plusieurs boulons filetés.

14. Module de refoulement d'huile (100) selon l'une quelconque des revendications précédentes, dans lequel la pompe (3) présente une première sortie de pompe (3a) sur un premier côté faisant face à l'échangeur de chaleur (4) et une seconde sortie de pompe (3b), une première entrée de pompe (3c) et une seconde entrée de pompe (3d) sur un second côté faisant face au carter d'huile (1) et opposé au premier côté.

15. Module de refoulement d'huile (100) selon l'une quelconque des revendications précédentes, dans lequel un arbre d'entraînement (3f) de la pompe (3) est disposé de manière parallèle à un couvercle de boîtier (30) ou à une base de boîtier (20) du carter d'huile (1) et / ou entre des plans définis par le couvercle de boîtier (30) et la base de boîtier (20).
